(19) **Europäisches Patentamt / European Patent Office / Office européen des brevets**

(11) **EP 1 669 792 B1**

(12) **EUROPEAN PATENT SPECIFICATION**

(45) Date of publication and mention
of the grant of the patent:
**31.10.2007 Bulletin 2007/44**

(51) Int Cl.:
*G02B 27/01* (2006.01)   *G02B 27/22* (2006.01)
*G02B 6/00* (2006.01)   *H04N 13/00* (2006.01)

(21) Application number: **06003529.2**

(22) Date of filing: **12.12.2001**

(54) **Wearable display system comprising a waveguide**

Tragbares Anzeigesystem

Système d affichage portable

(84) Designated Contracting States:
**DE FR GB NL**

(30) Priority: **15.12.2000 US 255448 P**
**26.12.2000 US 257283 P**
**10.01.2001 KR 2001001350**

(43) Date of publication of application:
**14.06.2006 Bulletin 2006/24**

(62) Document number(s) of the earlier application(s) in
accordance with Art. 76 EPC:
**01129638.1 / 1 215 522**

(73) Proprietor: **Samsung Electronics Co., Ltd.**
**Suwon-si**
**Gyeonggi-do (KR)**

(72) Inventors:
• **Song, Young-ran**
**Paldal-gu**
**Suwon-si, Gyeonggi-do (KR)**

• **Song, Seok-ho**
**Guri-si, Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 535 402**   **EP-A- 0 770 897**
**EP-A- 0 883 012**   **US-A- 5 539 422**
**US-A- 5 812 186**

• **PATENT ABSTRACTS OF JAPAN vol. 2000, no. 05, 14 September 2000 (2000-09-14) & JP 2000 056259 A (FUJI XEROX CO LTD), 25 February 2000 (2000-02-25)**
• **PATENT ABSTRACTS OF JAPAN vol. 2000, no. 12, 3 January 2001 (2001-01-03) & JP 2000 267041 A (FUJI XEROX CO LTD), 29 September 2000 (2000-09-29)**

**Description**

The present invention relates to personal display systems, and more particularly, to a wearable display system capable of transmitting a display signal through an eyeglass-type or goggle-type optical device to be displayed at a location near the eye of a user.

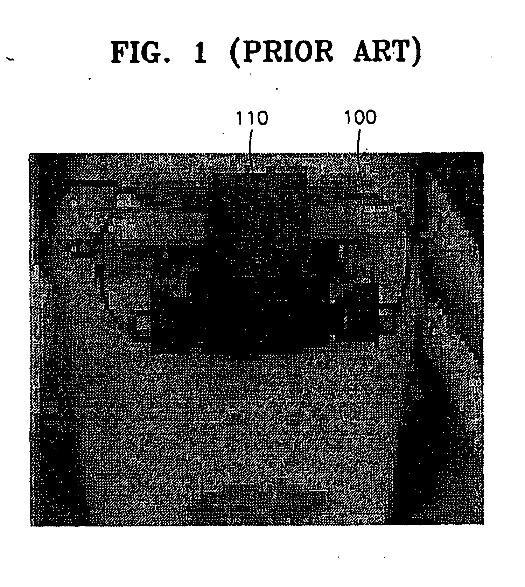

Conventional optical display systems used in the military, in medicine or for personal entertainment, which are generally known as head mounted display (HMD) systems, have been designed for users to see video signals via an eyeglass-type, goggle-type or helmet-type wearable device. These personal display systems allow users to receive video information while moving from place to place. FIG. 1 shows one example of the appearance of an HMD. Referring to FIG. i, the HMD is made of a general eyeglasses 100 and an image-driving unit 110 that is attached to the center of the eyeglasses 100. The driving unit 110 is bulky, heavy and unpleasant in appearance. The large volume and heavy weight of the image-driving unit 110 is due to a lot of optical elements constituting the unit.

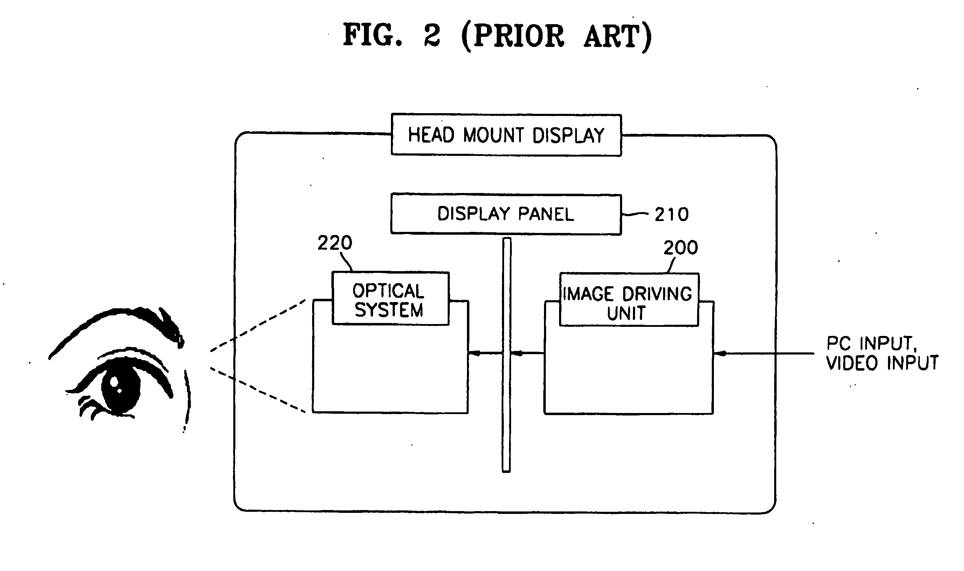

FIG. 2 shows the structure of a general HMD. In FIG. 2, the HMD comprises an image driving unit 200, a display panel 210 and an optical system 220. The image driving unit 200 stores a signal received from exterior sources such as a personal computer or video device (not shown) and processes the received signal to display it on the display panel 210 such a liquid crystal display (LCD) panel. The optical system 220 makes the signal displayed on the display panel 210 look as an appropriate virtual image to the eye of a user via an image-enlarging optical system. The HMD can further include other head-mounted devices or cable for receiving signals from an external source.

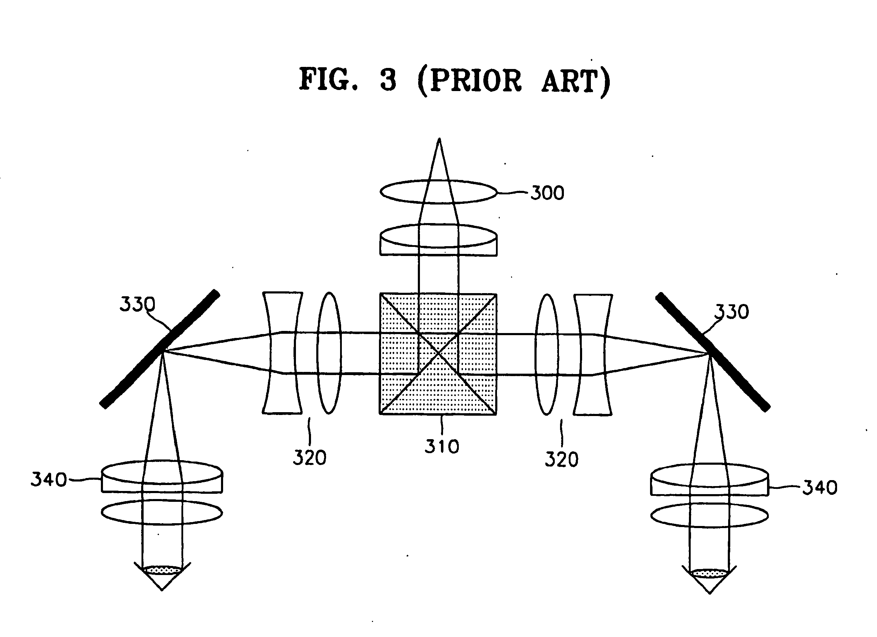

FIG. 3 shows the general structure of the optical system 220 of the general HMD of FIG. 2. The conventional optical system 220 is composed of a collimating lens 300, an X prism 310, focusing lenses 320, fold mirrors 330 and ocular lenses (or magnifying lenses) 340. The collimating lens 300 collimates the light (a signal) emitted from the display panel or the like. The X prism 310 redirects light received from the collimating lens 300 in the right and left directions. The focusing lenses 320 are separately placed on the right and left of the X prism 310 to focus collimated light redirected by the X prism 310 is focused. The fold mirrors 330 reflect the light focused by the focusing lenses 320 toward the eyes of a user. The ocular lenses (or a magnifying lenses) 340 allow small signals passing through the above-described optical elements to appear to the eyes of a user. At this time, if the light propagating through the optical system 220 is polychromatic, lenses for removing chromatic aberration must be used as the ocular lenses 340.

In a general HMD wearable display system, an optical system employs several precisely designed optical elements, such as a collimating lens, an X prism, focusing lenses, folder lenses, ocular lenses and the like, as described above. For this reason, it is difficult to manufacture the general HMD wearable display system, that is, a lot of effort and time are required. Even if the lenses and elements are designed precisely, additional difficulties in aligning the lenses and devices together may occur. Moreover, a special eyepiece must be additionally designed to remove chromatic aberration of a color signal. Therefore, the general HMD wearable display system is expensive to manufacture. In addition, the conventional optical system is bulky and heavy due to the use of a plurality of optical devices, so that it is inconvenient for a user to wear the HMD

It is therefore the object of the present invention to provide a wearable display system that is simple to manufacture, removes chromatic aberration using gratings and realizes three-dimensional images.

This object is solved by the subject matter of independent claim 1.

Preferred embodiments are defined in the dependent claims.

Accordingly, there is provided a wearable display system having at least one display panel for outputting at least one signal processed a predetermined way, comprising: at least one waveguide for guiding the propagation of the at least one signal output from the at least one display panel; a plurality of gratings for diffracting the at least one signal propagating through the at least one waveguide: and at least one magnifying lens for magnifying the at least one signal diffracted by at least one of the gratings.

It is preferable to have the plurality of gratings comprising, at least one first grating for diffracting the at least one signal output from the at least one display panel so that the at least one signal propagates through the at least one waveguide; and at least one second grating for diffracting the at least one signal propagating through the at least one waveguide after being diffracted by the at least one first grating.

It is preferable to have the plurality of gratings comprising, at least one first grating for reflecting the at least one signal output from the at least one display panel and incident on the at least one first grating at a predetermined incidence angle, at a predetermined reflection angle; and at least one second grating for reflecting the at least one signal propagating through the at least one waveguide and incident upon the at least one second grating at the same angle as the predetermined reflection angle at the at least one first grating, at the same angle as the predetermined incidence angle at the at least one first grating.

It is preferable to have the plurality of gratings comprising, at least one first grating for transmitting the at least one signal output from the at least one display panel and incident on the at least one first grating at a predetermined incidence angle, at a predetermined transmission angle to propagate through the at least one waveguide; and at least one second grating for transmitting the at least one signal propagating through the at least one waveguide and incident upon the at least one second grating at the same angle as the predetermined transmission angle at the at least one first grating, at the same angle as the predetermined incidence angle at the at least one first grating.

It is preferable to have the plurality of gratings comprising, at least one first grating for reflecting the at least one signal output from the at least one display panel and incident on the at least one first grating at a predetermined incidence angle at a predetermined reflection angle; and at least one second grating for transmitting the at least one signal propagating through the at least one waveguide and then incident upon the at least one second grating at the same angle as the predetermined reflection angle at the at least one first grating, at the same angle as the predetermined incidence angle at the at least one first grating.

It is preferable to have the plurality of gratings comprising, at least one first grating for transmitting the at least one signal output from the at least one display panel and incident upon the at least one first grating at a predetermined incidence angle, at a predetermined transmission angle; and at least one second grating for reflecting the at least one signal propagating through the at least one waveguide and incident upon the at least one second grating at the same angle as the predetermined transmission angle at the at least one first grating, at the same angle as the predetermined incidence angle at the at least one first grating.

It is preferable that the wearable display system further comprises at least one shutter for alternately blocking at least one signal in the waveguide to produce a three-dimensional image.

It is preferable that the at least one magnifying lens is movable along a predetermined length of the at least one waveguide.

The waveguide is preferably made of glass or plastic or particularly, acryl substance (PMMA).

It is preferable that the gratings and the waveguide are incorporated into one single-body.

It is preferable that the magnifying lens and the waveguide are incorporated into one single-body.

It is preferable that the gratings and the magnifying lens are incorporated into one single-body.

The magnifying lens is preferably formed with holographic optical element (HOE) or a diffraction optical element (DOE).

The above object and advantages of the present invention will become more apparent by describing in detail preferred embodiments thereof with reference to the attached drawings in which:

FIG. 1 is an exterior view of a conventional head mounted display (HMD);
FIG. 2 is a schematic diagram of a general conventional HMD;
FIG. 3 is a schematic diagram of the optical system in the general conventional HMD of FIG. 2;
FIGS. 4A and 4B show wearable display systems according to the present invention;
FIG. 5 is a schematic diagram of a preferred embodiment of the wearable display system according to the present invention;
FIG. 6 illustrates an example for explaining a conjugate relationship between gratings;
FIG. 7A illustrates an example of a grating;
FIGS. 7B and 7C illustrate a transmission-type grating and a reflection-type grating, respectively;
FIGS. 8A to 8H show various possible embodiments of a wearable display system of the present invention according to the types of gratings and the arrangement of gratings on a waveguide;
FIG. 9 shows another preferred embodiment of a wearable display system according to the present invention;
FIGS. 10A and 10B show other preferred embodiments of a wearable display system according to the present invention in which display panels are attached to both sides of a waveguide;
FIG. 11 shows a wearable display system according to the present invention adopting a shutter to realize a three-dimensional image;
FIGS. 12A and 12B illustrate an application of controlling an inter-pupillary distance (IPD) in a wearable display system according to the present invention;
FIG. 13 shows a preferred embodiment of a wearable display system according to the present invention having a monocular structure;
FIGS. 14A to 14H show various possible embodiments of a wearable display system according to the present invention having a monocular structure, depending on the types of gratings and the arrangement of gratings on a waveguide;
FIGS. 15A and 158 show other embodiments of a wearable display system according to the present invention having a monocular structure;
FIGS. 16A and 16B illustrate ways in which chromatic aberration is removed by gratings used in the present invention;
FIGS. 17A to 17C show gratings suitable for the present invention; and
FIGS. 18A to 18E illustrate examples of various ocular lenses.

Hereinafter, the present invention will be described in detail with reference to the attached drawings.

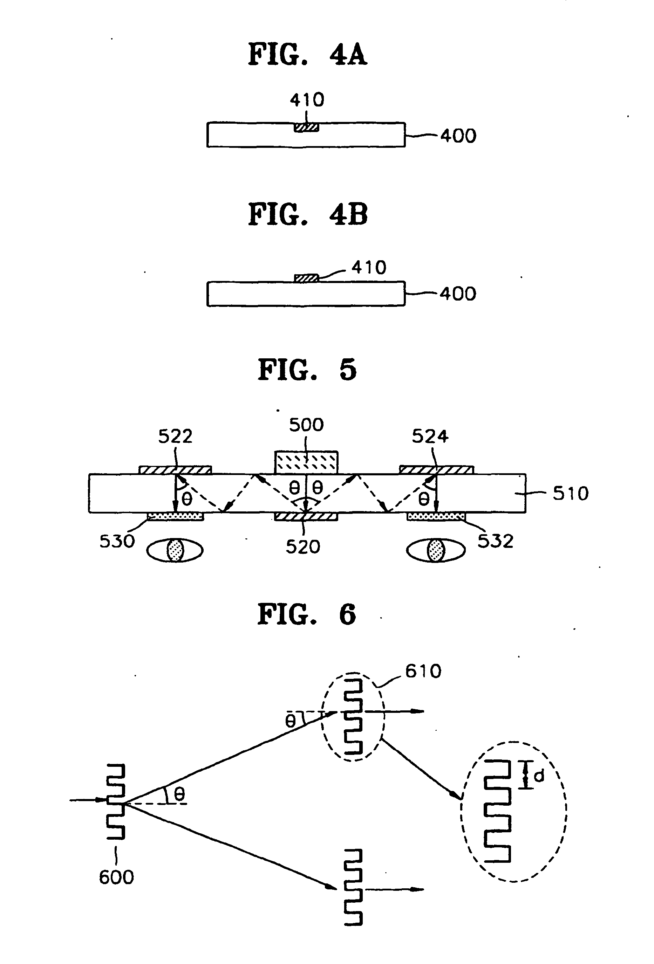

FIGS. 4A and 4B are a view of the front and of the top of a wearable display system according to the present invention, respectively. In FIGS. 4A and 4B, the wearable display system has a simple structure where a lens 400 and a display panel 410 are combined together. The wearable display system according to the present invention has a thin, light and small structure due to the use of gratings and a magnifying lens as compared to the conventional art. Thus, the wearable display system according to the present invention is easy and convenient to wear like eyeglasses, unlike existing bulky and heavy helmet-type HMDs. Further, the present invention provides a wearable display system having a module structure in which the module is attachable/detachable to conventional eyeglasses. The exterior of the wearable display system illustrated in FIGS. 4A and 4B is just an example and a variety of thin, light and small wearable display systems having different exteriors can be realized.

A wearable display system according to the present invention can be manufactured as a binocular type or a monocular type. A binocular type is designed for a user to look a display image using both of his or her eyes, whereas a monocular type allows a user to look a display image using only one of his or her eyes. In the case of a binocular type, a three-dimensional image (3D) display can be achieved, which will be described later in detail.

First, a binocular wearable display system will now be described.

FIG. 5 is a schematic diagram of preferred embodiment of a wearable display system according to the present invention. The wearable display system comprises a display panel 500; a waveguide 510, first, second and third gratings 520, 522 and 524, and magnifying lenses 530 and 532. The display panel 500 outputs a signal received from a predetermined signal source (not shown) via wire or radio (not shown). The waveguide 510 guides the propagation of light emitted from the display panel 500. The first, second and third gratings 520, 522 and 524 diffract the light passing through the waveguide so that the light can finally travel toward the eyes of a user. The magnifying lenses 530 and 532 allow the user to see a magnified image by magnifying the light that comes out of the waveguide 510 and travels toward the eyes of the user.

In FIG. 5, when light emitted from the display panel 500 is incident upon the waveguide 510 at a predetermined angle, the first grating 520, which is installed opposite to the display panel 500, at the area of the waveguide where light is first incident, diffracts the incident light down the waveguide 510 in both directions so that the incident light has a total internal reflection angle 2 in the waveguide 510. The total internal reflection angle is calculated by Equation (1):

$$\theta = \sin^{-1}\left(\frac{1}{n}\right)$$

$$\dots (1)$$

wherein the numeral 1 is the refractive index of air and n is the refractive index of the material of the waveguide 510.

The path of light traveling in the waveguide must be shorter than the focal distance **f** of the magnifying lenses 530 and 532 installed in front of the user's eyes. For instance, if t is the thickness of the waveguide 510, nxt must be shorter than the focal distance **f**. However, the size of the display panel 500 and the focal length and size of the magnifying lenses 530 and 532 must be chosen according to the desired size of a magnified image in consideration of the purpose of the wearable display system (NED). Then, the entire structure of the waveguide is designed and the type and thickness thereof and the number of times reflection occurs are determined based on this consideration. The first grating 520 and the second grating 522, and the first grating 520 and the third grating 524, have a conjugate relationship, respectively. That is, the second and third gratings 522 and 524 diffract incident light at the same predetermined angle at which light is incident on the first grating 520, provided the angle at which light is incident on each of the second and third gratings 522 and 524 is the same as the angle at which light is diffracted by the first grating 520. At that time, the second grating 522 is the same as the third grating 524. In the embodiment relating to FIG. 5, a wearable display system having one display panel and three gratings is described, but the numbers of gratings and display panels are not limited in the present invention.

FIG. 6 shows an example of the conjugate relationship between the gratings described above. The first and second gratings 600 and 610 must have the same grating space d and must be positioned parallel to the waveguide.

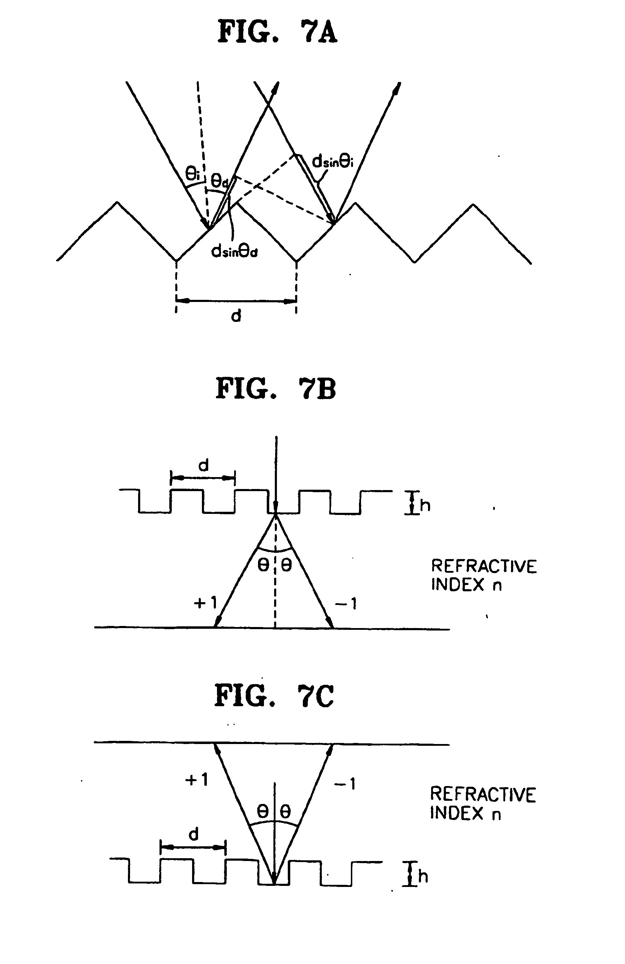

FIG. 7A illustrates an example of the diffraction principle of a grating. Provided that an incidence angle is $\theta_i$, a diffraction angle is $\theta_d$ and a pitch of a grating is d, the following equation (2) is obtained:

$$(\sin\theta_d - \sin\theta_i) = m\frac{\lambda}{d}$$

$$\dots (2)$$

4

wherein *m* is diffraction order and λ is the wavelength of incident light. A diffraction angle can be controlled by varying the shape and characteristics of a grating. At that time, if light diffracted from a grating propagates into the waveguide, the diffraction angle of light must satisfy the condition of the internal total reflection angle.

FIGS. 7B and 7C illustrate a transmission-type grating and a reflection-type grating, respectively. The transmission-type grating in FIG. 7B bends incident light by θ and transmits it in both directions. For example, light diffracted in the left direction is +1 and light diffracted in the right direction is -1. Sign denotes left/right directions and '1' indicates diffraction order to be '1'. The reflection-type grating in FIG. 7C reflects incident light by θ in both directions.

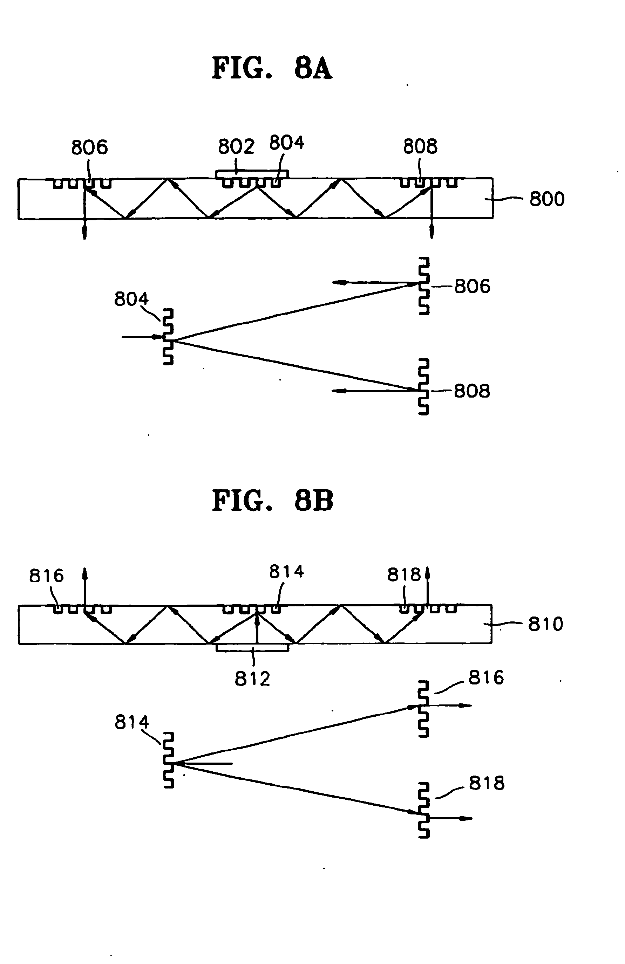

FIG. 8A shows the structure of a wearable display system having a waveguide on which a display panel 802 and first, second and third gratings 804 are positioned opposite to the direction of the eyes of a user. Light emitting from the display panel 802 at a predetermined angle is bent and transmitted in the both directions of the waveguide via the first grating 804, and is incident on the second grating 806 and the third grating 808, which have a conjugate relationship with the first grating 804, at the same incidence angle as the diffraction angle of the first grating 804, respectively. The light incident on the second and third gratings 806 and 808 is reflected at the same angle as the incidence angle on the first grating 804 and heads toward the eyes of the user. Magnifying lenses are installed on the left and right faces of the waveguides 800 where the reflected light reaches, and the user can look at a magnified signal via the magnifying lenses. From this embodiment, it is noted that the first grating 804 is a transmission type and the second and third gratings 806 and 808 are reflection-type.

FIG. 8B shows a wearable display system in which the display panel 812 is installed in the opposite direction of the eyes of a user and first, second and third gratings 814, 816 and 818 are disposed on the side of the waveguide through a signal is transmitted to the eyes of the user. Light that is incident on the first grating 814 within the waveguide through the waveguide 810, is reflected in both directions at a predetermined angle. The reflected light propagates in the waveguide 810 and is incident on the second and third gratings 816 and 818, which have a conjugate relationship with the first grating 814, at the same angle as the predetermined angle by which light is diffracted by the first grating 814. The incident light is transmitted by the second and third gratings 816 and 818 at the same angle as a predetermined incidence angle at the first grating 814 and travels toward the eyes of the user. Predetermined magnifying lenses are mounted on the second and third gratings 816 and 818, and magnify a transmitted signal. From this embodiment, the first grating 814 is a reflection type and the second and third gratings 816 and 818 are a transmission type.

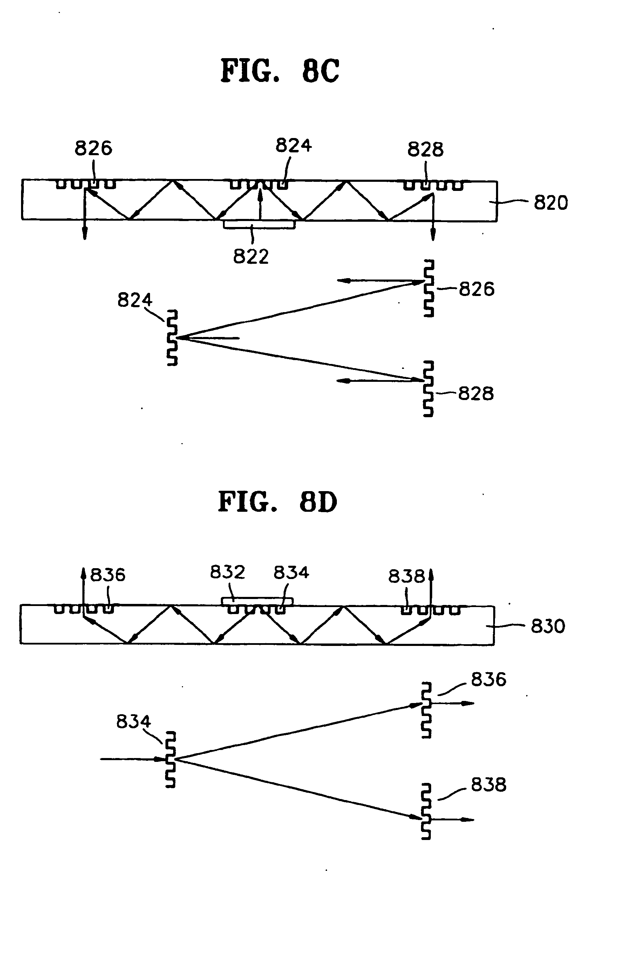

FIG. 8C shows the structure of a wearable display system where a display panel 822 is installed in the direction of the eyes of a user and first, second and third gratings 824, 826 and 828 are installed on the side of the waveguide opposite to the side through which a signal is transmitted to the eyes of the user. Light that is incident upon the first grating 824 from the display panel 822 via the waveguide 820 at a predetermined incidence angle, is reflected at a predetermined reflection angle at the first grating 824 in both directions. The reflected light propagates in the both directions of the waveguide 820 and is incident on the second and third gratings 826 and 828, which have a conjugate relationship with the first grating 824, at the same angle as the reflection angle of the first grating 824. The light incident on the second and third gratings 826 and 828 is reflected at the same angle as the incidence angle at 4he first grating 824, and propagates toward the eyes of the user. On both faces of the waveguide 820 where the reflected light reaches, magnifying lenses are installed, so that a user can look at a magnified signal. In this embodiment, the first, second and third gratings are all reflection types.

FIG. 8D shows the structure of a wearable display system having a display panel 832 and first, second and third gratings 834, 836 and 838 on a waveguide 830 in the direction of the eyes of a user. The light of a signal, which is incident on the first grating 814 from the display panel 832 at a predetermined incidence angle, is transmitted at a predetermined transmission angle in both directions within the waveguide 830. The transmitted light propagates in the waveguide 830 and then is incident on the second and third gratings 836 and 838, which are conjugates of the first grating 834, at the same angle as the transmission angle at the first grating 834. The incident light is transmitted through the faces of the second and third gratings 836 and 838 at the same angle as the predetermined incidence angle at the first grating 934 and propagates toward the eyes of the user. Magnifying lenses attached to the second and third gratings 836 and 828 magnify a signal to be transmitted. In this embodiment, the first, second and third gratings 834, 836 and 838 are all transmission types.

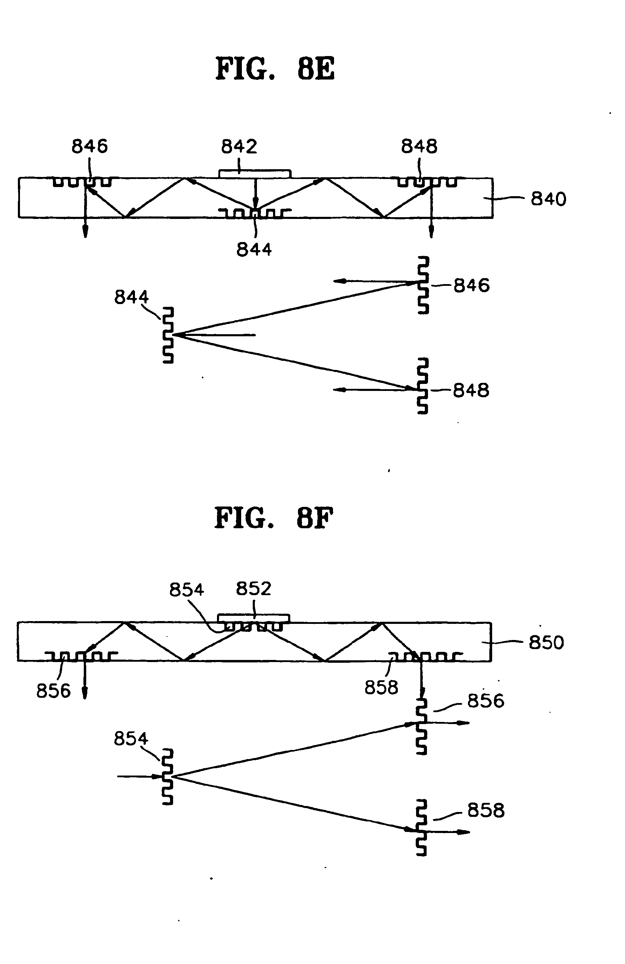

FIG. 8E illustrates the structure of a wearable display system in which a display panel 842 and second and third gratings 846 and 848 are placed in the opposite direction of the eyes of a user and a first grating 844 is positioned on the side of the waveguide through which a signal is transmitted to the eyes of the user. Light, which is generated from the display panel 842 and is incident on the first grating 844 via the waveguide 840 at a predetermined incidence angle, is reflected from the first grating 844 in both directions at a predetermined reflection angle. The reflected light propagates in the left/right directions of the waveguide 840 and then is incident on the second and third gratings 846 and 848, which are conjugates of the first grating 844, at the same angle as the reflection angle at the first grating 844. The incident light is reflected from the second and third gratings 846 and 848 at the same angle as a predetermined incidence angle at the first grating 844, and then propagates toward the eyes of the user. Magnifying lenses attached to both faces of the waveguide 840 where the reflected light reaches, allow a user to look at a magnified signal. In this embodiment, the first, second and third gratings are all reflection types.

FIG. 8F shows a wearable display system in which a display panel 852 and a first grating 854 are placed in the opposite direction of the eyes of a user and second and third gratings 856 and 858 are installed on the side of the waveguide through which a signal is transmitted to the eyes of the user. The light of a signal that is incident upon the first grating 854 from the display panel 852 is transmitted at a predetermined transmission angle in the both directions of the waveguide 850. The transmitted light propagates in the waveguide 850 and then is incident upon the second and third gratings 856 and 858, which are conjugates of the first grating 854, at the same angle as the transmission angle at the first grating 854. The incident light is transmitted through the faces of the second and third gratings 856 and 858 at the same angle as a predetermined incidence angle at the first grating and then propagates toward the eyes of the user. Predetermined magnifying lenses are attached to the second and third gratings 856, 858 and magnify a transmitted signal. In this embodiment, the first, second and third gratings 854, 856 and 858 are all transmission types.

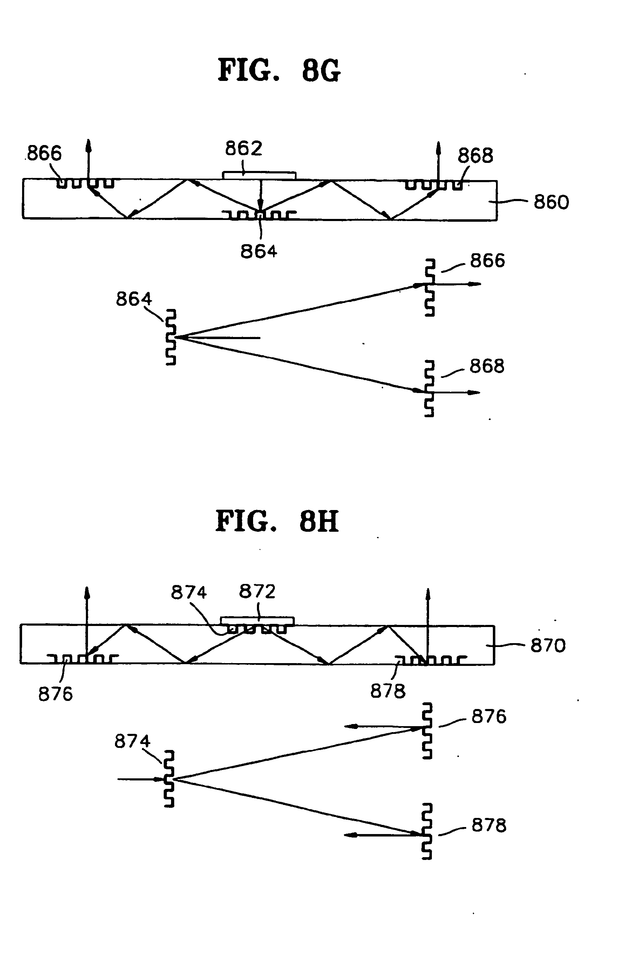

FIG. 8G shows a wearable display system in which a display panel 862 and second and third gratings 866 and 868 are placed in the direction of the eyes of a user, and a first grating 864 is placed on the side of the waveguide opposite to the side through which a signal is transmitted to the eyes of the user. The light emitting from the display panel 862 is incident upon the first grating 864 in the waveguide 860 via the waveguide 860, and reflected at a predetermined angle in the both directions of the waveguide. The reflected light propagates in the waveguide 860 and is incident upon the second and third gratings 866 and 868, which are conjugates of the first grating 864, at the same incidence angle as the reflection angle at the first grating 864. The incident light is transmitted through the second and third gratings 866 and 868 at the same angle as a predetermined incidence angle at the first grating 864, and travels toward the eyes of the user. A predetermined magnifying lens attached to the second and third gratings 866 and 868 magnifies a penetrated signal. In this embodiment, the first grating 864 is a reflection type and the second and third gratings 866 and 868 are transmission types.

FIG. 8H shows a wearable display system in which a display panel 872 and a first grating 874 are placed in the direction of the eyes of the user and second and third gratings 876, 878 are installed on the side of the waveguide opposite to the side through which a signal is transmitted to the eyes of the user. The light emitting from the display panel 872 is incident upon the first grating 874 at a predetermined incidence angle and then transmitted at a predetermined transmission angle in both directions of the waveguide 870 via the first grating 874. The light transmitted in the waveguide 870 propagates in the left and right directions of the waveguide 870 and then is incident upon the second and third gratings 876 and 878, which are conjugates of the first grating 874, at the same angle as the transmission angle at the first grating 874. The light that is incident on the second and third gratings 876 and 878 is reflected at the same angle as the incidence angle at the first grating 874 and propagates toward the eyes of the user. Magnifying lenses are attached to the left and right sides of the waveguide where the reflected light reaches and allows a user to look at a magnified signal. In this embodiment, the first grating 874 is a transmission type and the second and third gratings 854 and 856 are reflection types.

As described above, it is noted that various types of wearable display systems can be realized depending on how a display panel and gratings are arranged on a waveguide. In the embodiment, as shown in FIGS. 8A, 8B, 8E and 8F, it is preferable that a display panel is located on the side of the waveguide opposite to the side through which a signal is transmitted to the eyes of a user.

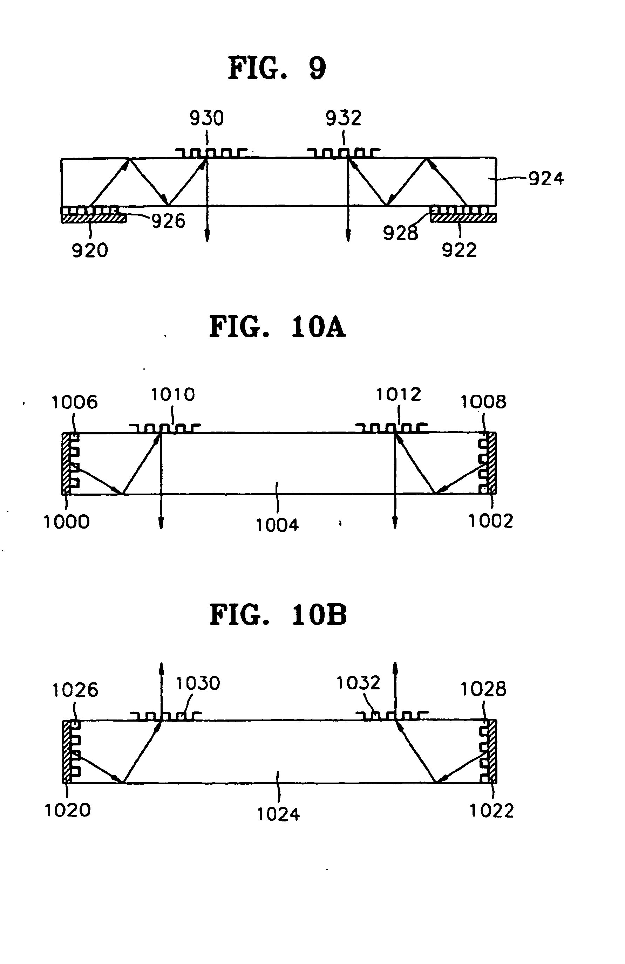

FIG. 9 illustrates another embodiment of a wearable display system according to the present invention adopting two display panels. From the structure of this system, it is noted that display panels 920 and 922 are placed on the lower parts in the left and right directions of a waveguide, not the center thereof. First gratings 926 and 928 are installed parallel to the display panels 920 and 922, respectively. Second gratings 930 and 932, which are conjugates of the first gratings 926 and 928, are placed in the opposite direction of the eyes of a user near the center of the waveguide 924. Light of a signal emitting from the display panels 920 and 922 is transmitted in the waveguide at a predetermined transmission angle via the first gratings 926 and 928, and the transmitted light is incident on the second gratings 930 and 932 at the same angle as the transmission angle. Light, which is incident on the second gratings 930 and 932, is reflected at the same angle as the incidence angle at the first gratings on the waveguide 924, and allows the reflected light to travel toward the eyes of the user. Magnifying lenses (not shown) are placed on the face of the waveguide where the reflected light reaches and magnify an image. In this embodiment, the first gratings 926 and 928 are transmission types and the second gratings 930 and 932 are reflection types. A variety of structures of wearable display systems can be created by different combinations of the constituents included in FIG. 9, as wearable display systems of diverse structures are made by various combinations of the types and locations of gratings and the positions of display panels in FIGS. 8A-8H. FIGS. 8 and 9 show combinations of one or two display panels and a predetermined number of gratings that are adequate for display panels, but the numbers of display panels and gratings can be increased depending on the design. In this case, numerous different structures of wearable display systems can be derived by various combinations the types and positions of gratings and the position of display panels as shown in FIGS. 8A - 8H.

FIG. 10A shows an embodiment of a wearable display system having display panels mounted on the both ends of a waveguide. In this structure, display panels 1000 and 1002 are placed at opposite ends of a waveguide 1004, not on the sides thereof. First gratings 1006 and 1008 are installed parallel to the display panels 1000 and 1002. Second gratings 1010 and 1012, which are in the conjugates of the first gratings, are placed in the opposite direction of the eyes of a user near the center of the waveguide 1004. Light of a signal emitting from the display panels 1006 and 1008 is transmitted into the waveguide 1004 through the first gratings 1006 and 1008, and the transmitted light is incident upon the second gratings 1010 and 1012 at the same angle as the transmission angle. The light which is incident on the second gratings 1010 and 1012 is reflected at the same angle as the incidence angle at the first gratings, and allows the reflected light to head for the eyes of the user. On the surface of the waveguide where the reflected light reaches, magnifying lenses (not shown) are placed to magnify an image. In this embodiment, the first gratings 1006 and 1008 are transmission types and the second gratings 1010 and 1012 are reflection types.

FIG. 10B is another embodiment of the wearable display system illustrated in FIG. 10A, i.e., the structure is the same, but the types of gratings are different. As in FIG. 10A, display panels 1020 and 1022 are positioned at the both sides of a waveguide, not on the sides thereof and first gratings 1026 and 1028 are installed parallel to the display panels 1020 and 1022. Second gratings 1030 and 1032, which are conjugates of the first gratings 1026 and 1028, are placed in the direction of the eyes of a user near the center of the waveguide 1024. Light emitting from the display panels 1020 and 1022 is transmitted into the waveguide 1024 at a predetermined angle by the first gratings 1026 and 1028, and the transmitted light is incident upon the second gratings 1030 and 1032 at the same angle as the transmission angle at the first gratings 1026 and 2028. The light which is incident on the second gratings 1030 and 1032 is transmitted at the same angle as the incidence angle at the first gratings and heads toward the eyes of the user. The transmitted light is magnified by magnifying lenses (not shown) attached to the outer sides of the second gratings 1030 and 1032. In this embodiment, the first gratings 1026 and 1028 and the second gratings 1030 and 1032 are all transmission types.

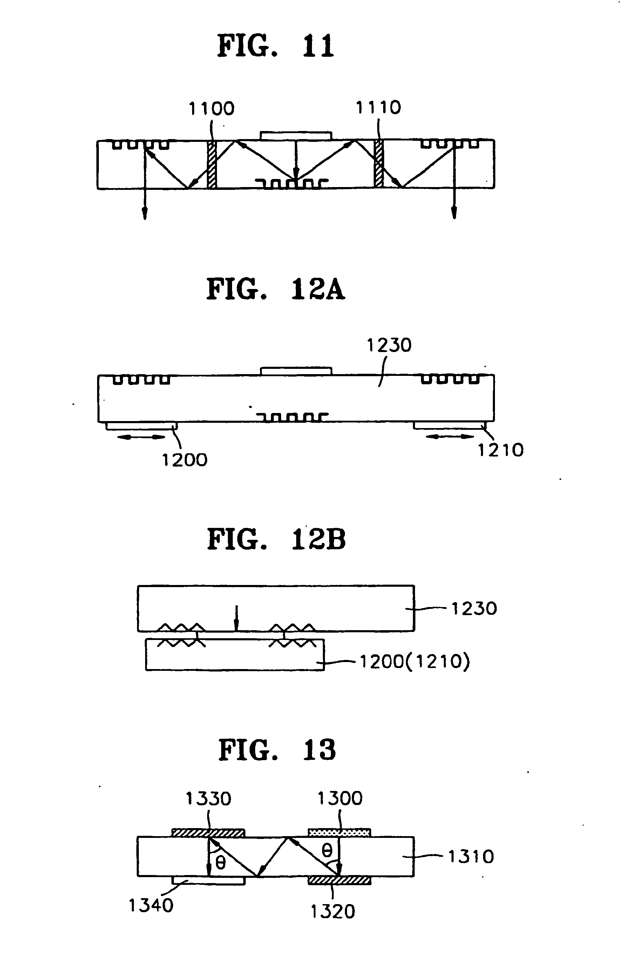

FIG. 11 illustrates a wearable display system according to the present invention, which adopts a shutter to realize a three-dimensional image. The example of FIG. 11 is a realized three-dimensional image example related to FIG. 8E. A shutter can be applied to all the wearable display systems having the structures described above. Shutters 1100 and 1110 for blocking light propagating in both directions of a waveguide are alternately opened and closed at different times so that the same image reaches each eye of a user at a different time, thereby causing an effect that an image looks three-dimensional. Although not shown in FIG. 11, the wearable display system having a shutter on only one side of the right and left sides can produce the same three-dimensional effects.

As describe above, a three-dimensional image is realized when the same image reaches the eyes of a user with a time difference. In the event that media having different refractive indexes are used as left and right waveguides where light propagates, the lattice of left and right gratings is differently spaced, or the number of left and right gratings is differently set, left and right diffraction angles become different from each other so that the propagation distance of light changes. As a result, a time different occurs in the final signal that enters the user's eyes, thereby the three-dimensional image effect can be achieved. When using a waveguide having different media on its right and left sides, second and third gratings must be designed in consideration of the diffraction angle of light incident on the first gratings that are different on right and left sides depending on the type of media of a waveguide. Further, the diffraction angle must be considered in designing gratings when the number of left and right gratings is differently set. At that time, a waveguide media must be selected and gratings must be designed under the assumption that the diffraction angle is made when total internal reflection occurs. Another way to achieve a three-dimensional image is to make the same signal reach the eyes of the user using two display panels with a predetermined time difference.

FIG. 12A shows an example of a wearable display system according to the present invention, which can control an inter-pupillary distance (IPD). The IPD of most adult men and women ranges from 50mm to 74mm. If a user wears a wearable display system is designed differently for a different IPD, the left and right images look different and overlap each other, and as a result, eye fatigue increases compared to when wearing a wearable display system that fits the user's IPD. Thus, in order to adjust IPD to make an image appear clearly, magnifying lenses 1200 and 1210 of a wearable display system can be moved to positions corresponding to the pupils of the eyes.

FIG. 12B illustrates an example of a wearable display system including waveguide 1230 having a saw-toothed part and saw-toothed magnifying lenses 1200 and 1210 that can be combined with or separated from the waveguide 1230, which allows a user to move the magnifying lenses 1200 and 1210 a predetermined distance along the waveguide 1230. Here, the width of the magnifying lenses 1200 and 1210 must be narrower than that of a grating for diffracting a signal, and further, the magnifying lenses 1200 and 1210 must be movable only within a distance the same as the width of a grating.

FIG. 13 is an embodiment of a wearable display system having a monocular structure. The monocular wearable display system employs the same structure and principles as the binocular display system of FIG. 5 except that it allows a user to look at an image with only one eye. The monocular display system comprises a display panel 1300, a waveguide 1310, a first grating 1320, a second grating 1330 and an eyepiece 1340. The display panel 1300 outputs a signal received from a predetermined signal source (not shown) via a wire or radio. The waveguide 1310 allows a signal emitted from the display panel 1300 to propagate in one direction. The first and second gratings 1320 and 1330 diffract a signal passing through the waveguide 1310 and finally allow the signal to head toward the eyes of the user. Here, the first grating 1320 and the second grating 1330 are conjugates as described above, which means that when light incident on the first grating 1320 at a predetermined incidence angle is diffracted at a predetermined angle, the light propagates through the waveguide 1310, is incident on the second grating 1322 at the same angle as the diffraction angle at the first grating 1320, and is diffracted at the same angle as the predetermined angle of incidence at the first grating 1320. The magnifying lens 1340 magnifies a signal that emits from the waveguide 1310 so that the image appears larger to the user.

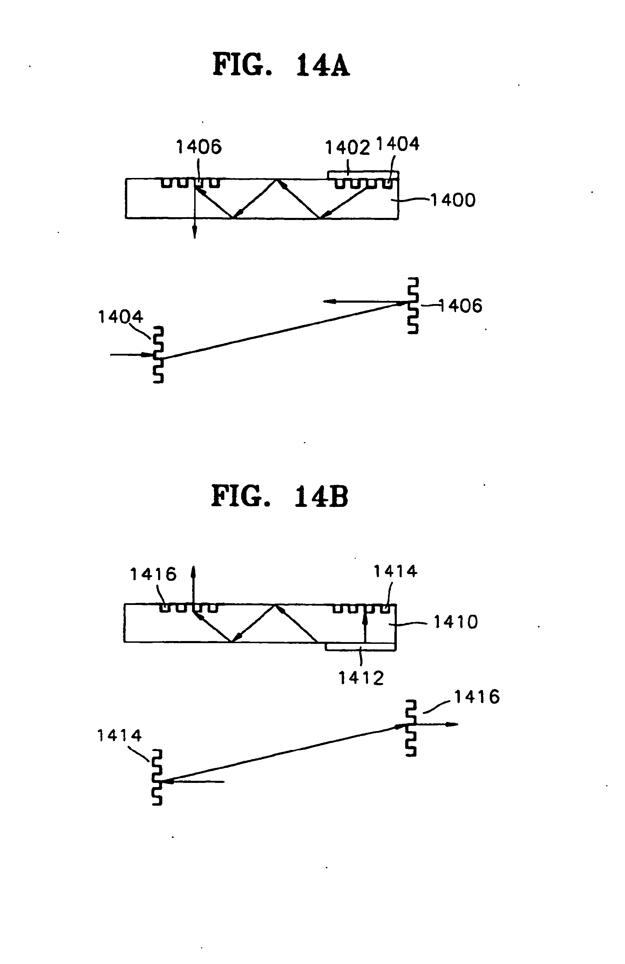

FIGS. 14A-14H illustrate various possible embodiments of a monocular wearable display system depending on the type of a grating and arrangement thereof on a waveguide.

FIG. 14A shows the structure of a monocular wearable display system in which a display panel 1402 and first and second gratings 1404 and 1406 are placed on a waveguide 1400 in the opposite direction of the eye of a user. Light emitting from the display panel is incident on the first grating 1402 at a predetermined angle and then is transmitted in the left direction within the waveguide via the first grating 1404 and then is incident on the second grating 1406, which is the conjugate of the first grating 1404, at the same angle as the transmission angle at the first grating 1404. Light incident on the second grating 1406 is reflected at the same angle as the incidence angle at the first grating 1404 and heads toward the eye of a user. On the surface of the waveguide 1400 where light reaches, a magnifying lens is installed and allows a user to look at a magnified signal. In this embodiment, the first grating 1404 is a transmission type and the second grating 1406 is a reflection type.

FIG. 14B shows a monocular wearable display system where a display panel 1412 is placed in the opposite direction of the eye of a user and first and second gratings 1414 and 1416 are installed on the side of a waveguide 1410 through which a signal is transmitted to the eye of the user. Light incident on the first grating 1414 in the waveguide 1410 at a predetermined incidence angle is reflected toward the left direction of the waveguide at a predetermined reflection angle. The reflected light propagates in the waveguide 1410 and is incident on the second grating 1416, which is the conjugate of the first grating 1414, at the same angle as the reflection angle at the first grating 1414. The incident light is transmitted out of the second grating 1416 at the same angle as the predetermined incidence angle at the first grating and heads toward the eye of the user. A predetermined magnifying lens is attached to the second grating 1416 and magnifies a signal to be transmitted. In this embodiment, the first grating 1414 is a reflection type and the second grating 1416 is a transmission type.

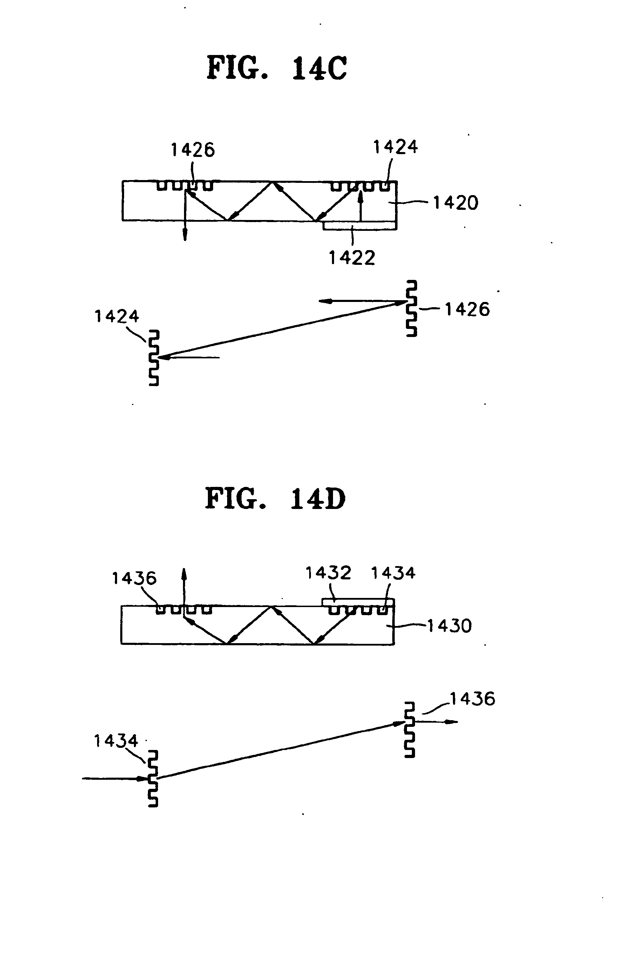

FIG. 14C shows a monocular wearable display system where a display panel 1422 is placed in the direction of the eye of a user and first and second gratings 1424 and 1426 are installed on the side of a waveguide 1420 opposite to the side through which a signal is transmitted to the eye of the user. Light, which emits from the display panel 1422 and is incident on the first grating 1424 at a predetermined incidence angle via the waveguide 1420, is reflected at a predetermined reflection angle in the left direction of the waveguide 1420. The reflected light propagates in the left direction of the waveguide 1420 and then is incident on the second grating 1426, which is the conjugate of the first grating 1424, at the same angle as the reflection angle at the first grating 1424. Light incident on the second grating 1426 is reflected and propagates toward the eye of the user at the same angle as the incidence angle at the first grating 1424. A magnifying lens is attached to the surface of the waveguide 1420 and allows the user to view a magnified signal. In this embodiment, the first and second gratings 1424 and 1426 are all reflection types.

FIG. 14D shows the structure of a monocular wearable display system where a display panel 1432, first and second gratings 1434 and 1436 are installed on the side of a waveguide 1430 through which a signal is transmitted to the eye of a user. Light of a signal, which is emitted from the display panel 1432 and is incident on the first grating 1434 at a predetermined incidence angle, is transmitted at a predetermined transmission angle toward the left direction within the waveguide 1430. The transmitted light propagates in the waveguide 1430 and is incident on the second grating 1436, which is the conjugate of the first grating 1434, at the same angle as the transmission angle at the first grating 1434. The incident light is transmitted through the second grating 1436 at the same angle as a predetermined incidence angle at the first grating 1434 and propagates toward the eye of the user. A magnifying lens is attached to the second grating 1436 and magnifies a signal to be transmitted. In this embodiment, the first and second gratings 1434 and 1436 are all transmission types.

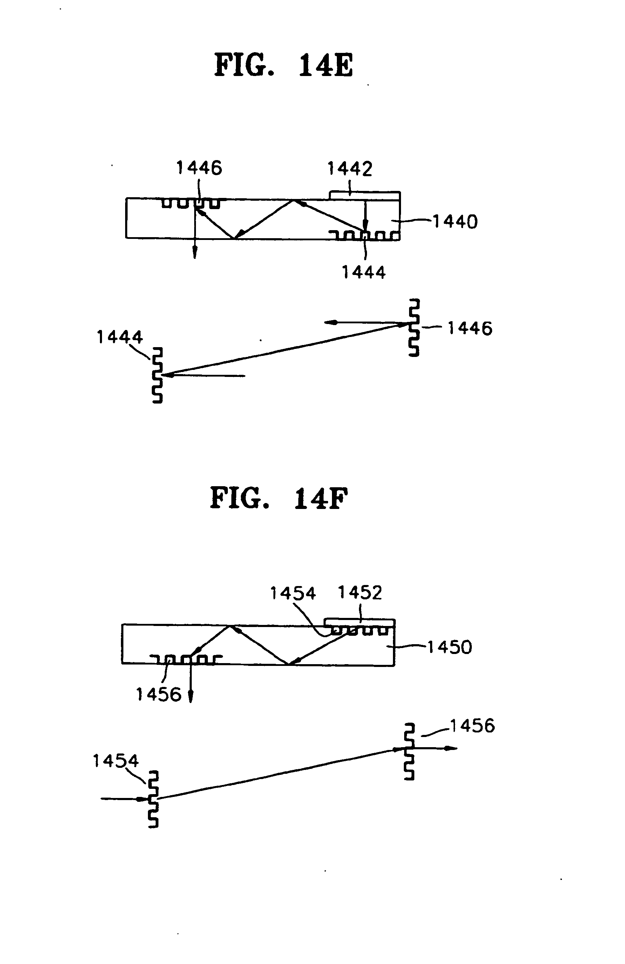

FIG. 14E shows the structure of a monocular wearable display system where a display panel 1442 and a second grating 1446 are placed in the opposite direction of the eye of a user and a first grating 1444 is installed on the side of the waveguide 1440 through which a signal is transmitted to the eye of the user. Light, which emits from the display panel 1442 and is incident on the first grating 1444 at a predetermined incidence angle via the waveguide 1440, is reflected toward the left direction at a predetermined reflection angle by the first grating 1444. The reflected light propagates in the left direction of the waveguide 1440 and is incident on the second grating 1446, which is the conjugate of the first grating 1444, at the same angle as the reflection angle at the first grating 1444. The incident light is reflected by the second grating 1446 at the same angle as the predetermined incidence angle at the first grating 1444 and propagates toward the eye of the user. A magnifying lens is attached to the face of the waveguide 1440 and allows the user to view a magnified signal. In this embodiment, the first and second gratings 1444 and 1446 are all reflection types.

FIG. 14F shows the structure of a monocular wearable display system where a display panel 1452 and a first grating 1454 are placed in the opposite direction of the eye of a user and a second grating 1456 is installed on the side of a waveguide 1450 through which a signal is transmitted to the eye of a user. Light of a signal, which is incident on the first grating 1454 from the display panel 1452 at a predetermined incidence angle, is transmitted toward the left direction within the waveguide 1450 at a predetermined transmission angle. The transmitted light propagates in the waveguide 1450 and is incident on the second grating 1456, which is the conjugate of the first grating 1454, at the same angle as the transmission angle at the first grating 1454. The incident light is transmitted through the second grating 1456 at the same angle as the predetermined incidence angle at the first grating 1454 and propagates toward the eye of the user. A magnifying lens is attached to the second grating 1456 and magnifies a signal to be transmitted. In this embodiment, the first and second gratings 1454 and 1456 are all transmission types.

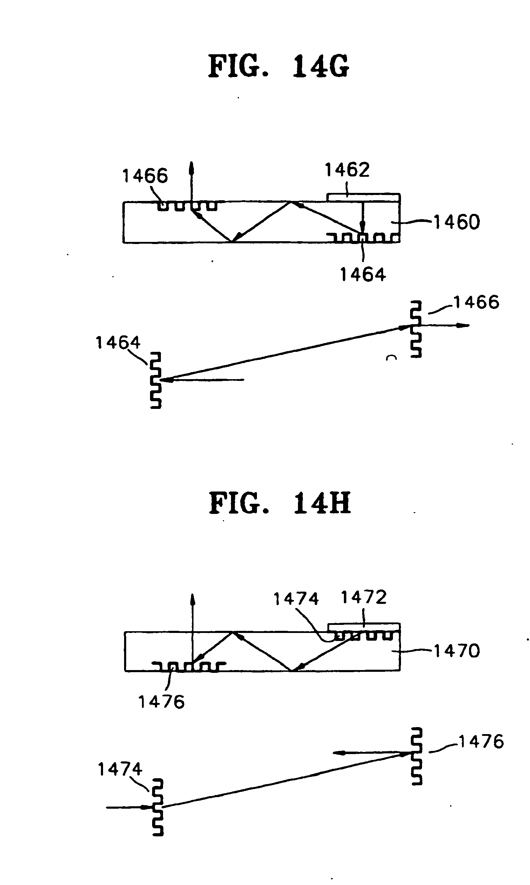

FIG. 14G shows the structure of a monocular wearable display system where a display panel 1462 and a second grating 1466 are placed on the side of a waveguide 1460 opposite to the side through which a signal is transmitted to the eye of a user and a first granting 1464. Light which is incident on the first grating 1464 within the waveguide 1460 at a predetermined incidence angle via the waveguide 1460, is reflected toward the left direction at a predetermined reflection angle. The reflected light propagates in the waveguide 1460 and then is incident on the second grating 1466, which is the conjugate of the first grating 1464, at the same angle as the reflection angle at the first grating 1464. The incident light is transmitted through the second grating 1466 at the same angle as the predetermined incidence angle at the first grating 1464 and travels toward the eye of the user. A magnifying lens is attached to the second grating 1466 and magnifies a signal to be transmitted. In this embodiment, the first grating 1464 is a reflection type and the second grating 1466 is a transmission type.

FIG. 14H shows the structure of a monocular wearable display system where a display panel 1472 and a first grating 1474 are placed in the direction of the eye of a user and a second grating 1476 is installed on the side of a waveguide 1470 through which a signal is transmitted to the eye of the user. Light emitted from the display panel 1472 at a predetermined incidence angle is transmitted in the right and left directions within the waveguide 1470 at a predetermined transmission angle via the first grating 1474. Light transmitted into the waveguide 1470 propagates in the left direction of the waveguide 1460 and then is incident on the second grating 1476, which is the conjugate of the first grating 1474, at the same angle as the transmission angle at the first grating 1474. Light incident on the second grating 1476 is reflected at the same angle as the incidence angle at the first grating 1474 and propagates toward the eye of the user. A magnifying lens is attached to the surface of the waveguide 1470 and allows a user to view a magnified signal. In this embodiment, the first grating 1474 is a transmission type and the second 1466 is a reflection type.

As described above, it is noted that a variety of monocular wearable display systems can be realized depending on the arrangement of a display panel and gratings on a waveguide. Accordingly, it is possible to derive other embodiments that have the same structure as the above-described embodiments, but the propagation direction of light is different, i.e. light propagates in the right direction.

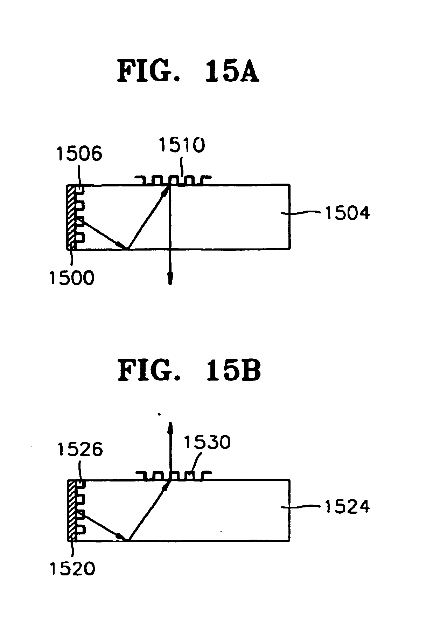

FIG. 15A is another embodiment of a monocular wearable display system. In this embodiment, a display panel 1500 is placed on the end of a waveguide 1504 and a first grating 1506 is located parallel to the display panel 1500. A second grating 1508, which is the conjugate of the first grating 1506, is positioned in the opposite direction of the eye of a user at the center of the waveguide 1504. Light of a signal which emits from the display panel 1500 is incident on the first grating 1506 at a predetermined incidence angle and then is transmitted into the waveguide 1504 at a predetermined transmission angle via the first grating 1506. The transmitted light is then incident on the second grating 1510 at the same angle as the transmission angle. Light incident on the second grating 1510 is reflected at the same angle with respect to the second grating 1510 as the incidence angle at the first grating 1506 and propagates toward the eye of the user. A magnifying lens (not shown) like an eyepiece is attached to the surface of the waveguide 1504 where the reflected light arrives and magnifies the signal. In this embodiment, the first grating 1506 is a transmission type and the second grating1508 is a reflection type.

FIG. 15B is still another embodiment of a monocular wearable display system that has the same structure as that of FIG. 15A, but adopts different types of gratings. Also, in this embodiment, a display panel 1520 is placed on the end of a waveguide 1524 and a first grating 1526 is located parallel to the display panel 1520. A second grating 1530, which is the conjugate of the first grating 1526, is placed in the direction of the eye of the user at the center of the waveguide 1524. Light of a signal which is emitted from the display panel 1520 is incident on the first grating 1526 at a predetermined incidence angle, and then is transmitted into the waveguide 1524 at a predetermined transmission angle via the first grating 1526, and the transmitted light is incident on the second grating 1530 at the same angle as the transmission angle. Light incident on the second grating 1530 is reflected at the same angle with respect to the second grating 1550 at the incidence angle at the first grating 1526 and travels toward the eye of the user. A magnifying lens (not shown) is attached to the surface of the waveguide 1524 where the reflected light arrives and magnifies the signal. In this embodiment, the first and second gratings 1526 and 1530 are transmission types.

In FIGS. 15A and 15B, a display panel is positioned at the left end of a waveguide. However, the position of a display panel can vary according to design. In this case, a first grating need not necessarily be placed at the same end of a waveguide where a display is placed.

A three-dimensional image can be realized by wearing the above-described two monocular wearable display systems at the same time, one on each eye, thereby the same signal is displayed with a time difference on the two monocular wearable display systems and thus a three-dimensional image can be achieved.

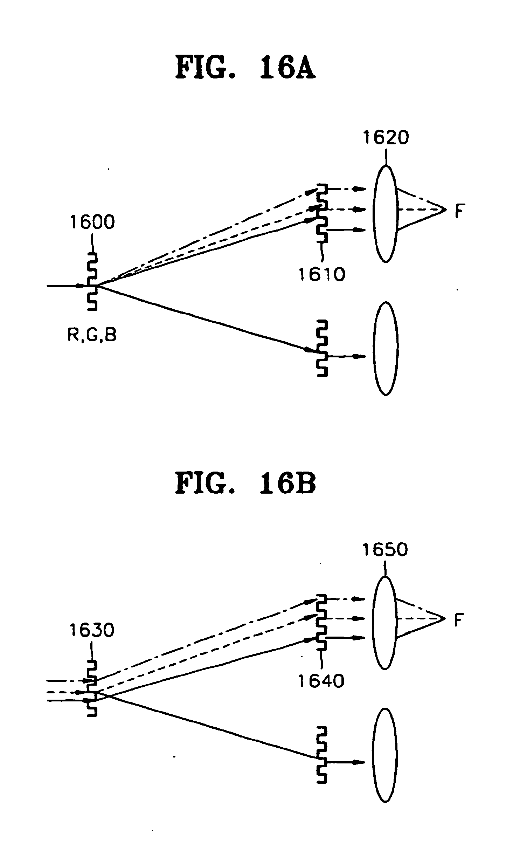

FIGS. 16A and 16B illustrate the removal of chromatic aberration by the gratings used in the present invention. Chromatic aberration occurs when the focuses of the R, G and B components of an incident color signal are not converged on one spot, that is, different color images are formed at different places. In the event that a color signal propagates via the gratings used in the present invention, different colors can be focused at one place by combining gratings having a conjugate relationship.

Referring to FIG. 16A, a first grating 1600 and a second grating 1610 are both transmission types and R, G and B color components of an incident signal are transmitted through the first grating 1600 at different transmission angles. Each of the transmitted color components is incident on the second grating 1610 at the same angle as the transmission angle at the first grating 1600, is transmitted through the second grating 1610 at the same incidence angle as that at the first grating and then is incident in parallel with the others on a magnifying lens 1620 such as an eyepiece. Each of the color components that reach the magnifying lens 1620 in parallel is focused with the same focal distance via the magnifying lens 1620 thereby removing chromatic aberration.

FIG. 16B shows R, G and B components of an incident signal incident on a first grating 1630 at a predetermined angle, in the case of first and second transmission-type gratings 1630 and 1640. The R, G and B components which are incident on the first grating 1630 at a predetermined angle propagate at different transmission angles and are incident on the second grating 1640 at the same angle as the transmission angle. Each of the incident color components passes through the second grating 1640 at the same angle as the predetermined incidence angle at the first grating 1630 and then is incident on a magnifying lens 1650 such as an eyepiece in parallel. The magnifying lens 1650 allows the color components that are incident in parallel to be focused at the same focal distance thereby removing chromatic aberration. The removal of chromatic aberration is obtained by the above-described gratings having a conjugate relationship.

The above-mentioned wearable display system can be achieved by incorporating a waveguide and gratings, or a waveguide and an eyepiece, or a waveguide and gratings and an eyepiece into one single-body.

The above-described waveguide is made of glass or plastic or particularly, acryl substance (PMMA).

The magnifying lens can be manufactured from a holographic optical element (HOE) or a diffraction optical element (DOE). A diffraction lens, a refractive lens, a combination of a diffraction lens and a refractive lens, or aspherics is used as the magnifying lens.

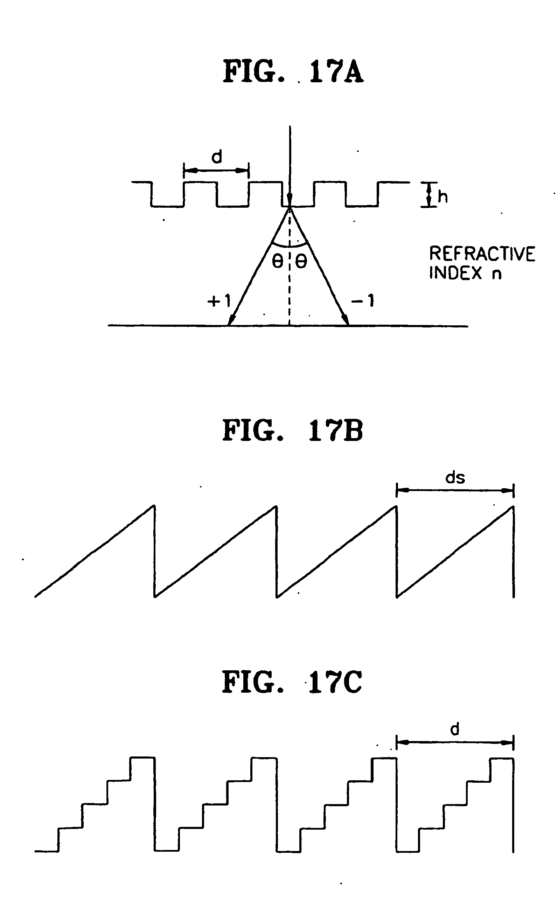

FIGS. 17A to 17C illustrate the types of gratings that can be used in the present invention. FIG. 17A shows a rectangular binary grating for diffracting light in both directions. FIGS. 17B shows a brazing-type grating that is saw-toothed and diffracts light only in one direction. FIG. 17C shows a grating that is multi-layered and is designed to enhance the efficiency of diffraction. In addition to these types, a hologram grating can be adopted. These gratings can be manufactured from an HOE or a DOE.

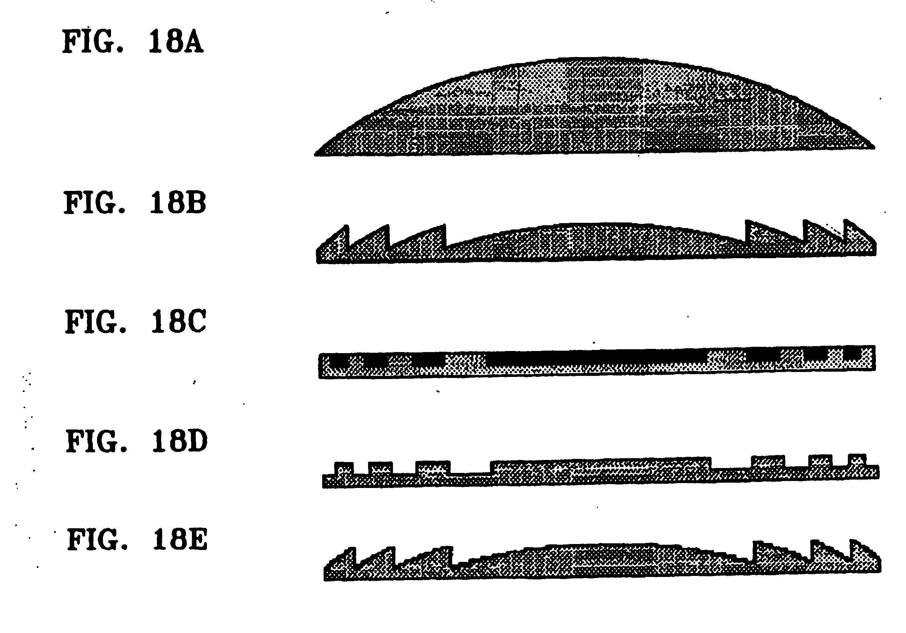

FIGS. 18A to 18E illustrate a variety of eyepieces.

According to the above-described present invention, a more light weight and compact wearable display system can be realized by minimizing the number of optical components, and the complexity and cost in manufacturing a display system can be reduced. In addition, a display system can be produced on a large scale by incorporating a waveguide, gratings and an eyepiece into one single body, and further, chromatic aberration can be removed by conjugate gratings.

## Claims

1.    A wearable display system comprising:

     at least one display panel (842, 852, 862, 872, 930, 932, 1030, 1032) for outputting at least one signal processed in a predetermined way;
     at least one waveguide (840, 850, 860, 870, 924, 1004) for guiding the propagation of the at least one signal output from the at least one display panel;
     a plurality of gratings for diffracting the at least one signal propagating through the at least one waveguide; and
     at least one magnifying lens for magnifying the at least one signal diffracted by at least one of the gratings, wherein the at least one magnifying lens is movable along a predetermined length of the at least one waveguide.

2.    The system according to claim 1, wherein the plurality of gratings comprises:

     at least one first grating for diffracting the at least one signal output from the at least one display panel so that the at least one signal propagates through the at least one waveguide; and
     at least one second grating for diffracting the at least one signal propagating through the at least one waveguide after being diffracted by the at least one first grating.

3. The system according to claim 1, wherein the plurality of gratings comprises:

at least one first grating for reflecting the at least one signal output from the at least one display panel and incident on the at least one first grating at a predetermined incidence angle, at a predetermined reflection angle; and
at least one second grating for reflecting or transmitting the at least one signal propagating through the at least one waveguide and incident upon the at least one second grating at the same angle as the predetermined reflection angle at the at least one first grating, at the same angle as the predetermined incidence angle at the at least one first grating.

4. The system according to claim 1, wherein the plurality of gratings comprises:

at least one first grating for transmitting the at least one signal output from the at least one display panel and incident on the at least one first grating at a predetermined incidence angle, at a predetermined transmission angle; and
at least one second grating for transmitting or reflecting the at least one signal propagating through the at least one waveguide and incident upon the at least one second grating at the same angle as the predetermined transmission angle at the at least one first grating, at the same angle as the predetermined incidence angle at the at least one first grating.

5. The system according to one of the claims 1 to 4, further comprising at least one shutter for alternately blocking at least one signal in the waveguide to produce a three-dimensional image.

6. The system according to claim 1, the system having a binocular structure, wherein the at least one waveguide is exactly one waveguide through which a signal propagates, the at least one display panel is exactly one display panel (500) placed at the center of the waveguide, the display panel for outputting the signal, and the plurality of gratings comprises:

a first grating (520) for diffracting the signal output from the display panel and incident upon the first grating at a predetermined incidence angle, in both the left and right directions of the waveguide at a predetermined diffraction angle;
second gratings (522, 524) for diffracting the signal, which is diffracted by the first grating in both the left and right directions of the waveguide to propagate through the waveguide and be incident upon the second gratings at the same angle as the predetermined diffraction angle at the first grating, at the same angle as the predetermined incidence angle at the first grating; and
magnifying lenses (532) for magnifying the signal diffracted by the second gratings.

7. The system according to claim 6, wherein the first grating is adjacent to the display panel and is a transmission type for transmitting the signal output from the display panel and incident upon the first grating at a predetermined incidence angle, in the left and right directions within the waveguide at a predetermined transmission angle.

8. The system according to claim 7, wherein each of the second gratings is a reflection type for reflecting the signal propagating through the waveguide and incident upon the second gratings at the same angle as the predetermined transmission angle at the first grating, at the same angle as the predetermined incidence angle at the first grating.

9. The system according to claim 7, wherein each of the second gratings is a transmission type for transmitting the signal propagating through the waveguide and incident upon the second grating at the same angle as the predetermined transmission angle at the first grating, at the same angle as the predetermined incidence angle at the first grating.

10. The system according to claim 7, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

11. The system according to claim 6, wherein the first grating is positioned opposite to the display panel in the waveguide and is a reflection type for reflecting a signal output from the display panel and incident upon the first grating at a predetermined incidence angle, at a predetermined reflection angle both in the left and right directions within the waveguide.

12. The system according to claim 11, wherein each of the second gratings is a transmission type for transmitting the signal propagating through the waveguide and incident upon the second grating at the same angle as the predetermined reflection angle at the first grating, at the same angle as the predetermined incidence angle at the first grating.

13. The system according to claim 11, wherein each of the second gratings is a reflection type for reflecting the signal propagating through the waveguide and incident upon the second grating at the same angle as the predetermined reflection angle at the first grating, at the same angle as the predetermined incidence angle at the first grating.

14. The system according to claim 11, wherein one of the second gratings is a transmission type for transmitting the signal propagating through the waveguide and incident upon said one second grating at the same angle as the predetermined transmission angle at the first grating, at the same angle as the predetermined incidence angle at the first grating, while another one of the second gratings is a reflection type for reflecting the signal propagating through the waveguide and incident upon said another second grating at the same angle as the predetermined transmission angle at the first gratings, at the same angle as the predetermined incidence angle at the first grating.

15. The system according to one of the claims 1 to 14, further comprising at least one shutter for alternatively blocking the signal within the waveguide to produce a three-dimensional image.

16. The system according to claim 1, the system having a monocular structure, wherein the at least one waveguide is exactly one waveguide through which a signal propagates, the at least one display panel is exactly one display panel placed on the waveguide, the display panel for outputting the signal, and the plurality of gratings comprises:

   a first grating for diffracting the signal output from the display panel and incident upon the first grating at a predetermined incidence angle, at a predetermined diffraction angle either in the left or right direction in the waveguide;
   a second grating for diffracting the signal propagating through the waveguide and incident upon the second grating at the same angle as the predetermined diffraction angle at the first grating, at the same angle as the predetermined incidence angle at the first grating; and
   one magnifying lens for magnifying the signal diffracted by the second grating.

17. The system according to claim 16, wherein the second grating is placed:

   on the same surface of the waveguide as the first grating; or
   on the opposite side of the waveguide as the first grating.

18. The system according to claim 16, wherein the first grating is located adjacent to the display panel, the first grating is a transmission type for transmitting the signal output from the display panel and incident upon the first grating at a predetermined incidence angle, either in the left or right direction within the waveguide at a predetermined transmission angle.

19. The system according to claim 16, the system having a monocular structure, wherein the at least one waveguide is exactly one waveguide through which a signal propagates, the at least one display panel is exactly one display panel placed either on the left or right end of the waveguide, the display panel for outputting the signal, and the plurality of gratings comprises:

   a first grating for diffracting the signal output from the display panel and incident upon the first grating at a predetermined incidence angle into the waveguide at a predetermined diffraction angle;
   a second grating oriented perpendicular to the first grating in the waveguide, the second grating for diffracting the signal propagating through the waveguide and incident upon the second grating at the same angle as the predetermined diffraction angle at the first grating, at the same angle as the predetermined incidence angle at the first grating; and
   one magnifying lens for magnifying the signal diffracted by the second grating.

**Patentansprüche**

1.  Tragbares Anzeigesystem, umfassend:

    wenigstens ein Anzeigefeld (842, 852, 862, 872, 930, 932, 1030, 1032) zum Ausgeben wenigstens eines Signals, das auf eine vorgegebene Weise verarbeitet wird;
    wenigstens einen Wellenleiter (840, 850, 860, 870, 924, 1004) zum Leiten der Ausbreitung des wenigstens einen Signals, das von dem wenigstens einen Anzeigefeld ausgegeben wird;
    eine Vielzahl von Gittern zum Beugen des wenigstens einen Signals, das sich über den wenigstens einen Wellenleiter ausbreitet; und
    wenigstens eine Vergrößerungslinse zum Vergrößern des wenigstens einen Signals, das von wenigstens einem der Gitter gebeugt wird, wobei die wenigstens eine Vergrößerungslinse entlang einer vorgegebenen Länge des wenigstens einen Wellenleiters bewegt werden kann.

2.  System nach Anspruch 1, wobei die Vielzahl von Gittern umfasst:

    wenigstens ein erstes Gitter zum Beugen des wenigstens einen Signals, das von dem wenigstens einen Anzeigefeld ausgegeben wird, so dass sich das wenigstens eine Signal über den wenigstens einen Wellenleiter ausbreitet; und
    wenigstens ein zweites Gitter zum Beugen des wenigstens einen Signals, das sich über den wenigstens einen Wellenleiter ausbreitet, nachdem es von dem wenigstens einen ersten Gitter gebeugt wurde.

3.  System nach Anspruch 1, wobei die Vielzahl von Gittern umfasst:

    wenigstens ein erstes Gitter, um das wenigstens eine Signal, das von dem wenigstens einen Anzeigefeld ausgegeben wird und in einem vorgegebenen Einfallswinkel auf das wenigstens eine erste Gitter auftrifft, in einem vorgegebenen Reflexionswinkel zu reflektieren; und
    wenigstens ein zweites Gitter, um das wenigstens eine Signal, das sich über den wenigstens einen Wellenleiter ausbreitet und in demselben Winkel wie der vorgegebene Reflexionswinkel bei dem wenigstens einen ersten Gitter auf das wenigstens eine zweite Gitter auftrifft, in demselben Winkel wie der vorgegebene Einfallswinkel bei dem wenigstens einen ersten Gitter zu reflektieren oder zu transmittieren.

4.  System nach Anspruch 1, wobei die Vielzahl von Gittern umfasst:

    wenigstens ein erstes Gitter, um das wenigstens eine Signal, das von dem wenigstens einen Anzeigefeld ausgegeben wird und in einem vorgegebenen Einfallswinkel auf das wenigstens eine erste Gitter auftrifft, in einem vorgegebenen Transmissionswinkel zu transmittieren; und
    wenigstens ein zweites Gitter, um das wenigstens eine Signal, das sich über den wenigstens einen Wellenleiter ausbreitet und in demselben Winkel wie der vorgegebene Transmissionswinkel bei dem wenigstens einen ersten Gitter auf das wenigstens eine zweite Gitter auftrifft, in demselben Winkel wie der vorgegebene Einfallswinkel bei dem wenigstens einen ersten Gitter zu transmittieren oder zu reflektieren.

5.  System nach einem der Ansprüche 1 bis 4, des Weiteren wenigstens einen Blendenverschluss umfassend, um das wenigstens eine Signal in dem Wellenleiter alternierend zu sperren, um ein dreidimensionales Bild zu erzeugen.

6.  System nach Anspruch 1, wobei das System eine Binokularstruktur aufweist, wobei der wenigstens eine Wellenleiter genau ein Wellenleiter ist, über den sich ein Signal ausbreitet, das wenigstens eine Anzeigefeld genau ein Anzeigefeld (500) ist, das in der Mitte des Wellenleiters platziert ist, das Anzeigefeld zum Ausgeben des Signals dient und die Vielzahl von Gittern umfasst:

    ein erstes Gitter (520), um das Signal, das von dem Anzeigefeld ausgegeben wird und in einem vorgegebenen Einfallswinkel auf das erste Gitter auftrifft, in einem vorgegebenen Beugungswinkel sowohl in die linke als auch die rechte Richtung des Wellenleiters zu beugen;
    zweite Gitter (522, 524), um das Signal, das von dem ersten Gitter sowohl in die linke als auch die rechte Richtung des Wellenleiters gebeugt wird, um sich über den Wellenleiter auszubreiten und in demselben Winkel wie der vorgegebene Beugungswinkel bei dem ersten Gitter auf die zweiten Gitter aufzutreffen, in demselben Winkel wie der vorgegebene Einfallswinkel bei dem ersten Gitter zu beugen; und
    Vergrößerungslinsen (532) zum Vergrößern des Signals, das von den zweiten Gittern gebeugt wird.

**7.** System nach Anspruch 6, wobei das erste Gitter an das Anzeigefeld angrenzt und ein Transmissionsgitter ist, um das Signal, das von dem Anzeigefeld ausgegeben wird und in einem vorgegebenen Einfallswinkel auf das erste Gitter auftrifft, in einem vorgegebenen Transmissionswinkel in die linke und die rechte Richtung in dem Wellenleiter zu transmittieren.

**8.** System nach Anspruch 7, wobei jedes der zweiten Gitter ein Reflexionsgitter ist, um das Signal, das sich über den Wellenleiter ausbreitet und in demselben Winkel wie der vorgegebene Transmissionswinkel bei dem ersten Gitter auf die zweiten Gitter auftrifft, in demselben Winkel wie der vorgegebene Einfallswinkel bei dem ersten Gitter zu reflektieren.

**9.** System nach Anspruch 7, wobei jedes der zweiten Gitter ein Transmissionsgitter ist, um das Signal, das sich über den Wellenleiter ausbreitet und in demselben Winkel wie der vorgegebene Transmissionswinkel bei dem ersten Gitter auf das zweite Gitter auftrifft, in demselben Winkel wie der vorgegebene Einfallswinkel bei dem ersten Gitter zu transmittieren.

**10.** System nach Anspruch 7, wobei eines der zweiten Gitter ein Transmissionsgitter ist, um das Signal, das sich über den Wellenleiter ausbreitet und in demselben Winkel wie der vorgegebene Transmissionswinkel bei dem ersten Gitter auf das eine zweite Gitter auftrifft, in demselben Winkel wie der vorgegebene Einfallswinkel bei dem ersten Gitter zu transmittieren, während ein anderes der zweiten Gitter ein Reflexionsgitter ist, um das Signal, das sich über den Wellenleiter ausbreitet und in demselben Winkel wie der vorgegebene Transmissionswinkel bei den ersten Gittern auf das andere zweite Gitter auftrifft, in demselben Winkel wie der vorgegebene Einfallswinkel bei dem ersten Gitter zu reflektieren.

**11.** System nach Anspruch 6, wobei das erste Gitter gegenüber dem Anzeigefeld in dem Wellenleiter positioniert ist und ein Reflexionsgitter ist, um ein Signal, das von dem Anzeigefeld ausgegeben wird und in einem vorgegebenen Einfallswinkel auf das erste Gitter auftrifft, in einem vorgegebenen Reflexionswinkel sowohl in die linke als auch die rechte Richtung in dem Wellenleiter zu reflektieren.

**12.** System nach Anspruch 11, wobei jedes der zweiten Gitter ein Transmissionsgitter ist, um das Signal, das sich über den Wellenleiter ausbreitet und in demselben Winkel wie der vorgegebene Reflexionswinkel bei dem ersten Gitter auf das zweite Gitter auftrifft, in demselben Winkel wie der vorgegebene Einfallswinkel bei dem ersten Gitter zu transmittieren.

**13.** System nach Anspruch 11, wobei jedes der zweiten Gitter ein Reflexionsgitter ist, um das Signal, das sich über den Wellenleiter ausbreitet und in demselben Winkel wie der vorgegebene Reflexionswinkel bei dem ersten Gitter auf das zweite Gitter auftrifft, in demselben Winkel wie der vorgegebene Einfallswinkel bei dem ersten Gitter zu reflektieren.

**14.** System nach Anspruch 11, wobei eines der zweiten Gitter ein Transmissionsgitter ist, um das Signal, das sich über den Wellenleiter ausbreitet und in demselben Winkel wie der vorgegebene Transmissionswinkel bei dem ersten Gitter auf das eine zweite Gitter auftrifft, in demselben Winkel wie der vorgegebene Einfallswinkel bei dem ersten Gitter zu transmittieren, während ein anderes der zweiten Gitter ein Reflexionsgitter ist, um das Signal, das sich über den Wellenleiter ausbreitet und in demselben Winkel wie der vorgegebene Transmissionswinkel bei den ersten Gittern auf das andere zweite Gitter auftrifft, in demselben Winkel wie der vorgegebene Einfallswinkel bei dem ersten Gitter zu reflektieren.

**15.** System nach einem der Ansprüche 1 bis 14, des Weiteren wenigstens einen Blendenverschluss umfassend, um das Signal in dem Wellenleiter alternierend zu sperren, um ein dreidimensionales Bild zu erzeugen.

**16.** System nach Anspruch 1, wobei das System eine Monokularstruktur aufweist, wobei der wenigstens eine Wellenleiter genau ein Wellenleiter ist, über den sich ein Signal ausbreitet, das wenigstens eine Anzeigefeld genau ein Anzeigefeld ist, das an dem Wellenleiter platziert ist, das Anzeigefeld zum Ausgeben des Signals dient und die Vielzahl von Gittern umfasst:

ein erstes Gitter, um das Signal, das von dem Anzeigefeld ausgegeben wird und in einem vorgegebenen Einfallswinkel auf das erste Gitter auftrifft, in einem vorgegebenen Beugungswinkel entweder in die linke oder die rechte Richtung in dem Wellenleiter zu beugen;
ein zweites Gitter, um das Signal, das sich über den Wellenleiter ausbreitet und in demselben Winkel wie der vorgegebene Beugungswinkel bei dem ersten Gitter auf das zweite Gitter auftrifft, in demselben Winkel wie der vorgegebene Einfallswinkel bei dem ersten Gitter zu beugen; und
eine Vergrößerungslinse zum Vergrößern des Signals, das von dem zweiten Gitter gebeugt wird.

**17.** System nach Anspruch 16, wobei das zweite Gitter platziert ist:

auf derselben Oberfläche des Wellenleiters wie das zweite Gitter; oder
auf der gegenüberliegenden Seite des Wellenleiters wie das erste Gitter.

**18.** System nach Anspruch 16, wobei das erste Gitter an das Anzeigefeld angrenzend angeordnet ist, das erste Gitter ein Transmissionsgitter ist, um das Signal, das von dem Anzeigefeld ausgegeben wird und in einem vorgegebenen Einfallswinkel auf das erste Gitter auftrifft, in einem vorgegebenen Transmissionswinkel entweder in die linke oder die rechte Richtung in dem Wellenleiter zu transmittieren.

**19.** System nach Anspruch 16, wobei das System eine Monokularstruktur aufweist, wobei der wenigstens eine Wellenleiter genau ein Wellenleiter ist, über den sich ein Signal ausbreitet, das wenigstens eine Anzeigefeld genau ein Anzeigefeld ist, das entweder an dem linken oder dem rechten Ende des Wellenleiters platziert ist, das Anzeigefeld zum Ausgeben des Signals dient und die Vielzahl von Gittern umfasst:

ein erstes Gitter, um das Signal, das von dem Anzeigefeld ausgegeben wird und in einem vorgegebenen Einfallswinkel auf das erste Gitter auftrifft, in einem vorgegebenen Beugungswinkel in den Wellenleiter zu beugen;
ein zweites Gitter, das senkrecht zu dem ersten Gitter in dem Wellenleiter ausgerichtet ist, wobei das zweite Gitter dazu dient, das Signal, das sich über den Wellenleiter ausbreitet und in demselben Winkel wie der vorgegebene Beugungswinkel bei dem ersten Gitter auf das zweite Gitter auftrifft, in demselben Winkel wie der vorgegebene Einfallswinkel bei dem ersten Gitter zu beugen; und
eine Vergrößerungslinse zum Vergrößern des Signals, das von dem zweiten Gitter gebeugt wird.

**Revendications**

**1.** Dispositif de visualisation portable, comprenant :

au moins un panneau de visualisation (842, 852, 862, 872, 930, 932, 1030, 1032) pour délivrer au moins un signal en sortie traité de manière prédéterminée,
au moins un guide d'ondes (840, 850, 860, 870, 924, 1004) pour guider la propagation du au moins un signal délivré en sortie par le au moins un panneau de visualisation,
une pluralité de réseaux pour diffracter le au moins un signal se propageant à travers le au moins un guide d'ondes, et
au moins une lentille grossissante pour grossir le au moins un signal diffracté par au moins un des réseaux, dans lequel la au moins une lentille grossissante peut se déplacer sur une longueur prédéterminée du au moins un guide d'ondes.

**2.** Dispositif selon la revendication 1, dans lequel la pluralité de réseaux comprend :

au moins un premier réseau pour diffracter le au moins un signal délivré en sortie par le au moins un panneau de visualisation, de sorte que le au moins un signal se propage à travers le au moins un guide d'ondes, et
au moins un deuxième réseau pour diffracter le au moins un signal se propageant à travers le au moins un guide d'ondes après avoir été diffracté par le au moins un premier réseau.

**3.** Dispositif selon la revendication 1, dans lequel la pluralité de réseaux comprend :

au moins un premier réseau pour réfléchir le au moins un signal délivré en sortie par le au moins un panneau de visualisation et incident sur le au moins un réseau à un angle d'incidence prédéterminé, à un angle de réflexion prédéterminé, et
au moins un deuxième réseau pour réfléchir ou transmettre le au moins un signal se propageant à travers le au moins un guide d'ondes, et incident sur le au moins un deuxième réseau au même angle que l'angle de réflexion prédéterminé au niveau du au moins un premier réseau, au même angle que l'angle d'incidence prédéterminé au niveau du au moins un premier réseau.

4. Dispositif selon la revendication 1, dans lequel la pluralité de réseaux comprend :

au moins un premier réseau pour transmettre le au moins un signal délivré en sortie par le au moins panneau de visualisation et incident sur le au moins un premier réseau à un angle d'incidence prédéterminé, à un angle de transmission prédéterminé, et
au moins un deuxième réseau pour transmettre ou réfléchir le au moins un signal se propageant à travers le au moins un guide d'ondes et incident sur le au moins un deuxième réseau au même angle que l'angle de transmission prédéterminé au niveau du au moins un premier réseau, au même angle que l'angle d'incidence prédéterminé au niveau du au moins un premier réseau.

5. Dispositif selon l'une des revendications 1 à 4, comprenant en outre au moins un diaphragme pour bloquer de façon alternative au moins un signal à l'intérieur du guide d'ondes pour produire une image en trois dimensions.

6. Dispositif selon la revendication 1, le dispositif ayant une structure binoculaire, dans lequel le au moins un guide d'ondes est exactement un guide d'ondes à travers lequel un signal se propage, le au moins un panneau de visualisation est exactement un panneau de visualisation (500) placé au centre du guide d'ondes, le panneau de visualisation étant prévu pour délivrer un signal en sortie, et la pluralité de réseaux comprend :

un premier réseau (520) pour diffracter le signal délivré en sortie par le panneau de visualisation et incident sur le premier réseau à un angle d'incidence prédéterminé, dans les directions vers la droite et vers la gauche à l'intérieur du guide d'ondes à un angle de diffraction prédéterminé,
des deuxièmes réseaux (522, 524) pour diffracter le signal, qui est diffracté par le premier réseau à la fois dans les directions vers la droite et vers la gauche à l'intérieur du guide d'ondes pour se propager à travers le guide d'ondes et être incident sur les deuxièmes réseaux au même angle que l'angle de diffraction prédéterminé au niveau du premier réseau, au même angle que l'angle d'incidence prédéterminé au niveau du premier réseau, et
des lentilles grossissantes (532) pour grossir le signal diffracté par les deuxièmes réseaux.

7. Dispositif selon la revendication 6, dans lequel le premier réseau est adjacent au panneau de visualisation et est un du type à transmission pour transmettre le signal délivré en sortie par le panneau de visualisation et incident sur le premier réseau à un angle d'incidence prédéterminé, dans les directions vers la droite et vers la gauche à l'intérieur du guide d'ondes à un angle de transmission prédéterminé.

8. Dispositif selon la revendication 7, dans lequel chacun des deuxièmes réseaux est un du type à réflexion pour réfléchir le signal se propageant à travers le guide d'ondes et incident sur les deuxièmes réseaux au même angle que l'angle de transmission prédéterminé au niveau du premier réseau, au même angle que l'angle d'incidence prédéterminé au niveau du premier réseau.

9. Dispositif selon la revendication 7, dans lequel chacun des deuxièmes réseaux est un du type à transmission pour transmettre le signal se propageant à travers le guide d'ondes et incident sur le deuxième réseau au même angle que l'angle de transmission prédéterminé au niveau du premier réseau, au même angle que l'angle d'incidence prédéterminé au niveau du premier réseau.

10. Dispositif selon la revendication 7, dans lequel un des deuxièmes réseaux est un du type à transmission pour transmettre le signal se propageant à travers le guide d'ondes et incident sur ledit un des deuxièmes réseaux au même angle que l'angle de transmission prédéterminé au niveau du premier réseau, au même angle que l'angle d'incidence prédéterminé au niveau du premier réseau, tandis qu'un autre des deuxièmes réseaux est un du type à réflexion pour réfléchir le signal se propageant à travers le guide d'ondes et incident sur ledit un autre des deuxièmes réseaux au même angle que l'angle de transmission prédéterminé au niveau des premiers réseaux, au même angle que l'angle d'incidence prédéterminé au niveau du premier réseau.

11. Dispositif selon la revendication 6, dans lequel le premier réseau est placé en face du panneau de visualisation à l'intérieur du guide d'ondes et est un du type à réflexion pour réfléchir un signal délivré en sortie par le panneau de visualisation et incident sur le premier réseau à un angle d'incidence prédéterminé, à un angle de réflexion prédéterminé à la fois dans les directions vers la droite et vers la gauche à l'intérieur du guide d'ondes.

12. Dispositif selon la revendication 11, dans lequel chacun des deuxièmes réseaux est un du type à transmission pour transmettre le signal se propageant à travers le guide d'ondes et incident sur le deuxième réseau au même angle que l'angle de réflexion prédéterminé au niveau du premier réseau, au même angle que l'angle d'incidence prédéterminé au niveau du premier réseau.

13. Dispositif selon la revendication 11, dans lequel chacun des deuxièmes réseaux est un du type à réflexion pour réfléchir le signal se propageant à travers le guide d'ondes et incident sur le deuxième réseau au même angle que l'angle de réflexion prédéterminé au niveau du premier réseau, au même angle que l'angle d'incidence prédéterminé au niveau du premier réseau.

14. Dispositif selon la revendication 11, dans lequel un des deuxièmes réseaux est un du type à transmission pour transmettre le signal se propageant à travers le guide d'ondes et incident sur ledit un des deuxièmes réseaux au même angle que l'angle de transmission prédéterminé au niveau du premier réseau, au même angle que l'angle d'incidence prédéterminé au niveau du premier réseau, tandis qu'un autre des deuxièmes réseaux est un du type à réflexion pour réfléchir le signal se propageant à travers le guide d'ondes et incident sur ledit un autre des deuxièmes réseaux au même angle que l'angle de transmission prédéterminé au niveau des premiers réseaux, au même angle que l'angle d'incidence prédéterminé au niveau du premier réseau.

15. Dispositif selon l'une des revendications 1 à 14, comprenant en outre au moins un diaphragme pour bloquer de façon alternative le signal à l'intérieur du guide d'ondes pour produire une image en trois dimensions.

16. Dispositif selon la revendication 1, le dispositif ayant une structure monoculaire, dans lequel le au moins un guide d'ondes est exactement un guide d'ondes à travers lequel un signal se propage, le au moins un panneau de visualisation est exactement un panneau de visualisation placé sur le guide d'ondes, le panneau de visualisation étant prévu pour délivrer un signal en sortie, et la pluralité de réseaux comprend :

un premier réseau pour diffracter le signal délivré en sortie par le panneau de visualisation et incident sur le premier réseau à un angle d'incidence prédéterminé, à un angle de diffraction prédéterminé dans les directions vers la droite et vers la gauche à l'intérieur du guide d'ondes, un deuxième réseau pour diffracter le signal se propageant à travers le guide d'ondes et incident sur le deuxième réseau au même angle que l'angle de diffraction prédéterminé au niveau du premier réseau, au même angle que l'angle d'incidence prédéterminé au niveau du premier réseau, et une lentille grossissante pour grossir le signal diffracté par le deuxième réseau.

17. Dispositif selon la revendication 16, dans lequel le deuxième réseau est placé :

sur la même surface du guide d'ondes que le premier réseau, ou sur le côté du guide d'ondes opposé au premier réseau.

18. Dispositif selon la revendication 16, dans lequel le premier réseau est placé adjacent au panneau de visualisation, le premier réseau est un du type à transmission pour transmettre le signal délivré en sortie par le panneau de visualisation et incident sur le premier réseau à un angle d'incidence prédéterminé, dans la direction soit vers la droite soit vers la gauche à l'intérieur du guide d'ondes à un angle de transmission prédéterminé.

19. Dispositif selon la revendication 16, le dispositif ayant une structure monoculaire, dans lequel le au moins un guide d'ondes est exactement un guide d'ondes à travers lequel un signal se propage, le au moins un panneau de visualisation est exactement un panneau de visualisation placé sur l'extrémité gauche ou droite du guide d'ondes, le panneau de visualisation étant prévu pour délivrer un signal en sortie, et la pluralité de réseaux comprend :

un premier réseau pour diffracter le signal délivré en sortie par le panneau de visualisation et incident sur le premier réseau à un angle d'incidence prédéterminé à l'intérieur du guide d'ondes, à un angle de diffraction prédéterminé, un deuxième réseau orienté perpendiculairement au premier réseau du guide d'ondes, le deuxième réseau étant prévu pour diffracter le signal se propageant à travers le guide d'ondes et incident sur le deuxième réseau au même angle que l'angle de diffraction prédéterminé au niveau du premier réseau, au même angle que l'angle d'incidence prédéterminé au niveau du premier réseau, et une lentille grossissante pour grossir le signal diffracté par le deuxième réseau.

## FIG. 1 (PRIOR ART)

110     100

EP 1 669 792 B1

# FIG. 2 (PRIOR ART)

HEAD MOUNT DISPLAY

DISPLAY PANEL ～210

220

OPTICAL SYSTEM

200

IMAGE DRIVING UNIT

PC INPUT, VIDEO INPUT

EP 1 669 792 B1

# FIG. 3 (PRIOR ART)

300

330

330

320

310

320

340

340

# FIG. 4A

410

400

# FIG. 4B

410

400

# FIG. 5

522    500    524

530    510

520    532

# FIG. 6

610

θ

600    θ

d

# FIG. 7A

# FIG. 7B

REFRACTIVE INDEX n

# FIG. 7C

REFRACTIVE INDEX n

# FIG. 8A

# FIG. 8B

## FIG. 8C

## FIG. 8D

# FIG. 8E

# FIG. 8F

# FIG. 8G

# FIG. 8H

# FIG. 9

# FIG. 10A

# FIG. 10B

# FIG. 11

1100   1110

# FIG. 12A

1230

1200   1210

# FIG. 12B

1230

1200(1210)

# FIG. 13

1330   1300

$\theta$   $\theta$   1310

1340   1320

# FIG. 14A

1406    1402 1404

1400

1404    1406

# FIG. 14B

1416    1414

1410

1412

1414    1416

# FIG. 14C

1426          1424

1420

1422

1424          1426

# FIG. 14D

1436     1432   1434

1430

1434          1436

# FIG. 14E

1446       1442

1440

1444

1444        1446

# FIG. 14F

1454  1452

1450

1456

1456

1454

# FIG. 14G

1466    1462

1460

1464

1466

1464

# FIG. 14H

1474  1472

1470

1476

1476

1474

## FIG. 15A

1506  1510

1504

1500

## FIG. 15B

1526  1530

1524

1520

# FIG. 16A

# FIG. 16B

# FIG. 17A

REFRACTIVE
INDEX n

# FIG. 17B

# FIG. 17C

FIG. 18A

FIG. 18B

FIG. 18C

FIG. 18D

FIG. 18E

EP 1 669 792 B1